# EUROPEAN PATENT APPLICATION

(11) **EP 1 059 778 A2**
(43) Date of publication of application: **13.12.2000**
(21) Application number: 00112152.4
(22) Date of filing: 06.06.2000
(51) Int. Cl.: H04L 12/58, G06F 17/60

(54) **Electronic mail communication terminal unit and storage medium**

(30) Priority: 08.06.1999 JP 16113699
(71) Applicant: SHARP KABUSHIKI KAISHA, Osaka 545 (JP)
(72) Inventor: Kazeoka, Susumu, Kashihara-shi, Nara-ken (JP)
(74) Representative: MÜLLER & HOFFMANN Patentanwälte

(57) **Abstract**

An electronic mail communication terminal unit is provided for communicating an electronic mail obtained by attaching data (405) that represents a specified area and a keyword (406) associated with the specified area to a mail text (404). This unit is provided with a keyword input section (65) into which the keyword (406) is inputted. If a result of determination in a keyword deciding section (62) represents the coincidence between the keyword inputted from the keyword input section (65) and the keyword (406) attached to the mail text (404), then the mail text (404) set in the specified area (405) is displayed on a display section (64). This allows the mail text to be provided with an area that can be read only by a specified individual and an area that can be read by all the receivers.

## Description

### BACKGROUND OF THE INVENTION

The present invention relates to an electronic mail communication terminal unit that exchanges communications of electronic mails with a mail server when connected to the mail server, and in particular, to an electronic mail communication terminal unit that allows the display of the contents of a mail text within a specified area associated with a keyword attached to the mail text only when a keyword inputted at the time of reception coincides with the keyword attached to the mail text as well as a storage medium that stores an electronic mail communication method control program.

The electronic mail communication terminal unit creates an electronic mail by inputting the destination (To, Cc) of a mail text, a title and the mail text by means of a keyboard or the like. The unit is thereafter connected to a mail server by way of a telephone line or the like. Then, the created electronic mail is transmitted to the connected mail server. On the other hand, the mail server stores the received electronic mail in a mail box provided for each destination.

When receiving an electronic mail, the unit is connected to the mail server by way of the telephone line or the like. Thereafter, the unit checks whether or not any electronic mail directed to the self unit exists in the mail box. Subsequently, if electronic mails directed to the self unit exist, then all the electronic mails or electronic mails selected from a list of the electronic mails directed to the self unit are received. Then, each received electronic mail is displayed on a display device such as an LCD.

The electronic mail communication terminal unit constructed as above is provided with a multiple address function for simultaneously transmitting a mail text of identical contents to a plurality of destinations. The above-mentioned multiple address function is also utilized for a variety of information services such as the guidance of conferences, club activities and the like, the minutes of the proceedings, stock information and leisure information (this is referred to as a first prior art technique).

A prior art technique capable of knowing the contents of an electronic mail while ensuring the security of the electronic mail without taking trouble to use the electronic mail communication terminal unit is disclosed in the prior art reference of Japanese Patent Laid-Open Publication No. HEI 5-14406. That is, according to this technique, if an electronic mail arrives at the mail server, then contact to the receiver of this electronic mail is made by means of telephone. Then, if a personal identification number inputted by the receiver by button dialing or similar means coincides with a preparatorily registered personal identification number, then the receiver is informed of the contents of the electronic mail (this is referred to as a second prior art technique).

The prior art technique proposed in the prior art reference of Japanese Patent Laid-Open Publication No. HEI 6-276221 is constructed so that an encrypted mail text is received. Then, the decryption and display of the mail text are executed only when the password attached to the mail text coincides with the inputted password. Therefore, only the specified user is allowed to read the mail text, and this ensures the strict secrecy of the contents of the electronic mail (this is referred to as a third prior art technique).

However, there have been caused the following problems when the first prior art technique is used. That is, in the case of, for example, an electronic mail used by a superior who manages his or her subordinates or an electronic mail for distributing the contents conforming to the contents of individual contracts for the information service of stocks, horse racing and so on, the contents of the electronic mails to be transmitted to a plurality of receivers are not totally identical but partially varied. In the above case, it is required to create an electronic mail corresponding to each receiver on the basis of the portion common to all the receivers. Therefore, if there are many receivers, then a plurality of electronic mails having partially varied contents are needed. This increases the labor for creating the electronic mails and makes the management of the electronic mail complicated.

When the receiver desires to know the contents of the mail text directed to, for example, another individual A, it is required to transmit again to the receiver the electronic mail of the same contents as the electronic mail directed to the individual A, increasing the labor. In this case, if the contents to be transmitted include the portion of which only the individual A desires to be informed, then there occurs the disadvantage that this portion is open to the individuals other than the individual A, causing difficulties in ensuring the security.

The second and third prior art techniques are the mere techniques that allow the individual who is designated as the receiver to read the electronic mail created in correspondence with only the receiver without letting the others know the electronic mail. Therefore, in the case where electronic mails of partially varied contents are transmitted to the respective ones of the plurality of receivers, the aforementioned problem is not solved and it is required to create a number of electronic mails. Furthermore, it is required to manage the number of electronic mails.

### SUMMARY OF THE INVENTION

The present invention is made to solve the aforementioned problems, and accordingly, it is an object of the present invention to provide an electronic mail communication terminal unit capable of providing one mail text with a portion that can be read only by a specified individual and a portion that can be read by all the receivers in the case of a multiple address mail.

Another object of the present invention is to provide an electronic mail communication terminal unit capable of setting areas that can be read by the respective receivers, in addition to the aforementioned object.

Another object of the present invention is to provide an electronic mail communication terminal unit capable of displaying the contents that can be read only by a specified individual in an easy-to-read displaying manner, in addition to the aforementioned objects.

Another object of the present invention is to provide an electronic mail communication terminal unit capable of optimizing the contents that can be read only by a specified individual according to the time at which the electronic mail is received, in addition to the aforementioned objects.

Another object of the present invention is to provide an electronic mail communication terminal unit capable of optimizing the contents that can be read only by a specified individual according to the region of the receiver, in addition to the aforementioned objects.

Another object of the present invention is to provide an electronic mail communication terminal unit capable of simplifying a procedure for displaying again the contents that can be read only by a specified individual, in addition to the aforementioned objects.

Another object of the present invention is to provide an electronic mail communication terminal unit capable of simplifying a procedure for displaying the contents that can be read only by a specified individual, in addition to the aforementioned objects.

Another object of the present invention is to provide a storage medium that stores an electronic mail communication method control program capable of partially setting an area that can be read only by a specified individual in the case of a multiple address mail.

In order to achieve the object, there is provided an electronic mail communication terminal unit for communicating an electronic mail obtained by attaching data that represents a specified area and a keyword corresponding to the specified area to a mail text of the electronic mail, the specified area being defined within a predetermined range of the mail text, wherein
the unit comprises a keyword inputting section by which a keyword is inputted and the mail text set in the specified area is displayed when the keyword inputted by the keyword inputting section coincides with the keyword attached to the mail text.

That is, the mail text set in the specified area is displayed only when the keyword that coincides with the keyword associated with the specified area is inputted to the keyword input section. Therefore, the mail text set in the specified area is displayed only for the individual who knows the keyword associated with this specified area. Therefore, it is allowed to provide one mail text both with the portion that can be read by the specified individual and the portion that can be read by all the receivers in the case of a multiple address mail.

Also, there is provided an electronic mail communication terminal unit for communicating an electronic mail obtained by attaching data that represents a plurality of specified areas set for a mail text and keywords associated respectively with the plurality of specified areas to the mail text of the electronic mail, the specified areas being defined within predetermined ranges of the mail text, wherein
the unit comprises a keyword inputting section by which a keyword is inputted and the mail text set in a specified area corresponding to a keyword that coincides with the keyword inputted by the keyword inputting section among the keywords associated with the plurality of specified areas is displayed.

That is, only the mail text in the specified area of which the keyword coincides with the keyword inputted to the keyword input section is displayed, and the mail text in the specified area corresponding to the other keyword is not displayed. Therefore, it is allowed to provide the areas that can be read by each of the plurality of receivers.

In one embodiment of the present invention, the unit comprises a means for receiving the electronic mail to which a processing operation associated with the specified area is attached and
the mail text set in the specified area is displayed by a method according to the processing operation.

That is, the mail text in the specified area is processed according to the attached processing operation and thereafter displayed. Therefore, by executing the processing by a method for facilitating the understanding of the mail text in the specified area, then the mail text in the specified area is displayed by the method for facilitating the understanding. Therefore, it is allowed to display the contents that can be read only by the specified individual in an easy-to-read displaying manner.

In one embodiment of the present invention, the unit comprises a means for receiving an electronic mail to which a time condition associated with the specified area is attached and
a mail text set in a specified area is displayed when a time at which the electronic mail is received satisfies the time condition.

That is, the mail text in the specified area is displayed only when the time at which the electronic mail is received and displayed is the time appropriate for the reading of the mail text in the specified area. Therefore, it is allowed to optimize the contents that can be read only by the specified individual according to the time at which the electronic mail is received.

In one embodiment of the present invention, the unit comprises a means for receiving an electronic mail to which a connection destination condition associated with the specified area is attached and
a mail text set in a specified area is displayed when connection destination designation data inputted for connection to an originator of the electronic mail satisfies the connection destination condition.

That is, the originator of the electronic mail is connected to a unit placed near this originator. The connection designation data is the data varied for each region. Therefore, the mail text in the specified area is displayed only in the specified region. Therefore, it is allowed to optimize the contents that can be read only by the specified individual according to the region of the receiver.

In one embodiment of the present invention, a plurality of specified areas are set for the mail text, the unit comprises a means for receiving an electronic mail obtained by attaching data that represents a plurality of specified areas and keywords associated with the plurality of specified areas to the mail text,
the mail text set in the specified area corresponding to the keyword that does not coincide with the keyword inputted by the keyword inputting section among the keywords associated with the plurality of specified areas is deleted and the mail text set in the specified area corresponding to the keyword that coincides with the keyword inputted by the keyword inputting section among the keywords associated with the plurality of specified areas is stored.

That is, after once receiving the electronic mail, the mail text in the specified area consistent with the inputted keyword is stored. Therefore, the mail text in the specified area can be displayed merely by subsequently executing the operation of displaying this stored mail text. It is allowed to simplify the procedure for displaying again the contents that can be read only by the specified individual.

In one embodiment of the present invention, the keyword is comprised of an user ID and a password.

That is, the user ID and the password are the data to be inputted when performing connection to the originator of the electronic mail. Therefore, the mail text in the specified area can be displayed without inputting the keyword. It is allowed to simplify the procedure for displaying the contents that can be read only by the specified individual.

Also, there is provided a storage medium which can be read by a computer and stores a control program of an electronic mail communication method for receiving an electronic mail obtained by attaching data that represents a specified area and a keyword associated with the specified area to a mail text, the specified area being defined as a predetermined range for the mail text of the electronic mail and the method comprising:
a procedure for deciding whether or not a keyword is attached to the mail text of the received electronic mail;
a procedure for deciding whether or not the inputted keyword coincides with the keyword attached to the mail text when it is decided that a keyword is attached; and
a procedure for displaying the mail text set in the specified area only when the inputted keyword coincides with the keyword attached to the mail text.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Fig. 1 is a block diagram showing an electronic mail communication terminal unit according to an embodiment of the present invention in the form of functional blocks;
Fig. 2 is a block diagram showing the electrical construction of the hardware of an electronic mail communication terminal unit according to an embodiment of the present invention;
Fig. 3 is a flowchart showing the principal operation in the transmission stage of a first embodiment;
Fig. 4 is a flowchart showing the principal operation in the reception stage of the first embodiment;
Figs. 5A through 5H are explanatory views showing the screens of a display device in the transmission stage;
Figs. 6A through 6H are explanatory views showing the screens of the display device in the reception stage;
Fig. 7 is an explanatory view showing a mail format corresponding to the inventive aspect mentioned in the claim 1;
Fig. 8 is an explanatory view showing a mail format corresponding to the inventive aspect mentioned in the claim 2;
Fig. 9 is a flowchart showing the principal operation in the transmission stage of a second embodiment;
Fig. 10 is a flowchart showing the principal operation in the reception stage of the second embodiment;
Figs. 11A and 11B are explanatory views showing the screens of a display device in the transmission stage;
Fig. 12 is an explanatory view showing an example of a processing operation;
Fig. 13 is an explanatory view showing the mail format of the second embodiment;
Fig. 14 is a flowchart showing the principal operation in the transmission stage of a third embodiment;
Fig. 15 is a flowchart showing the principal operation in the reception stage of the third embodiment;
Fig. 16 is an explanatory view showing an example of a time condition;
Figs. 17A and 17B are explanatory views showing the screens of a display device in the transmission stage;
Figs. 18A through 18C are explanatory views showing the screens of the display device in the reception stage;
Fig. 19 is an explanatory view showing the mail format of the third embodiment;
Fig. 20 is a flowchart showing the principal operation in the transmission stage of a fourth embodiment;
Fig. 21 is a flowchart showing the principal operation in the reception stage of the fourth embodiment;
Fig. 22 is an explanatory view showing an example of a connection destination condition;
Figs. 23A and 23B are explanatory views showing the screens of a display device in the transmission stage;
Figs. 24A through 24C are explanatory views showing the screens of the display device in the reception stage;
Fig. 25 is an explanatory view showing the mail format of the fourth embodiment;
Fig. 26 is a flowchart showing the principal operation in the transmission stage of a fifth embodiment;
Fig. 27 is a flowchart showing the principal operation in the reception stage of the fifth embodiment;
Fig. 28 is an explanatory view showing the mail format of the fifth embodiment;
Figs. 29A and 29B are explanatory views showing the screens of a display device in the transmission stage;
Figs. 30A through 30D are explanatory views showing the screens of the display device in the reception stage;
Fig. 31 is a flowchart showing the principal operation in the reception stage of a sixth embodiment;
Fig. 32 is an explanatory view showing the screen of a display device in the reception stage;
Fig. 33 is a flowchart showing the principal operation in the reception stage of a seventh embodiment;
Fig. 34 is an explanatory view showing the screen of a display device in the reception stage; and
Fig. 35 is an explanatory view showing the mail format of the seventh embodiment.

### DETAILED DESCRIPTION OF THE PREFERRED EMBODIMENTS

Embodiments of the present invention will be described below with reference to the drawings.

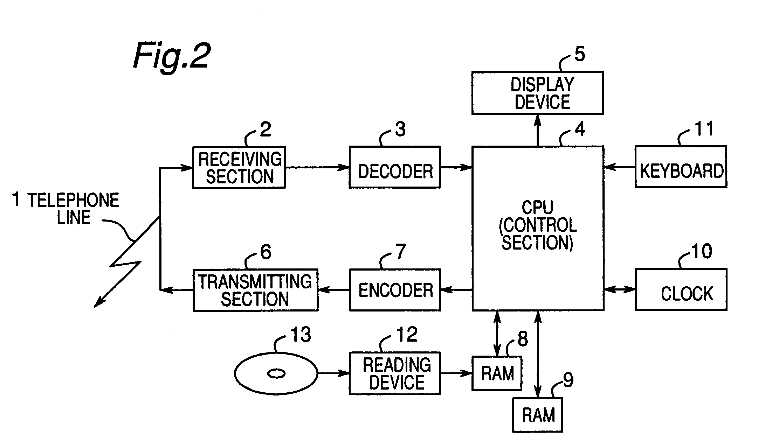

Fig. 2 is a block diagram showing the electrical construction of the hardware of an electronic mail communication terminal unit (referred to as a mail communication terminal hereinafter) according to the first through seventh embodiments of the present invention.

In the figure, a receiving section 2 is a block for receiving an electronic mail transmitted from a mail server (not shown) via a telephone line 1 and sending the received electronic mail to a decoder 3. The decoder 3 is a block for outputting to a CPU 4 a text obtained by converting the mail format of the electronic mail transmitted from the receiving section 2.

An encoder 7 is a block for converting the text transmitted from the CPU 4 into a mail format for communication use and outputting the resultant to a transmitting section 6. The transmitting section 6 is a block for transmitting the mail transmitted from the encoder 7 to the mail server via the telephone line 1.

A RAM 8 is a block for storing a program for making the CPU 4 execute a specified operation. A RAM 9 is a memory that serves as a working area for the CPU 4 and stores various data necessary for the CPU 4 to temporarily store the data. That is, the received electronic mail or the electronic mail to be transmitted is temporarily stored. Also, a user ID, a password, setting information of the connection destination and so on for connection to the mail server are stored.

A keyboard 11 is a block for inputting an electronic mail text and various setting items. A display device 5 is a block that is constructed of, for example, a liquid crystal display or the like and displays an electronic mail as well as the contents of various setting items. A clock 10 is a block for executing time counting.

The CPU 4 is a block for putting into effect a function as a mail communication terminal according to the present invention by executing the program stored in the RAM 8 by means of the display device 5, the keyboard 11 and the clock 10.

A storage medium 13 is constructed of, for example, a CD-ROM or the like and stores a program for putting the function of the mail communication terminal of the present invention into effect by means of the CPU 4.

That is, the storage medium 13 is a program storage medium that stores a control program for putting the function of an electronic mail communication terminal unit for communicating an electronic mail obtained by attaching data that represents a specified area and a keyword associated with the specified area to a mail text on the assumption that the specified area is defined as a predetermined range for the mail text of the electronic mail. There is stored a program for displaying the mail text set in the specified area when the inputted keyword coincides with the keyword attached to the mail text. The storage medium 13 also stores a program for putting the function of each of the first through seventh embodiments into effect as follows by means of the CPU 4.

The reading device 12 is a block for reading the program stored in the storage medium 13 and storing the read program into the RAM 8.

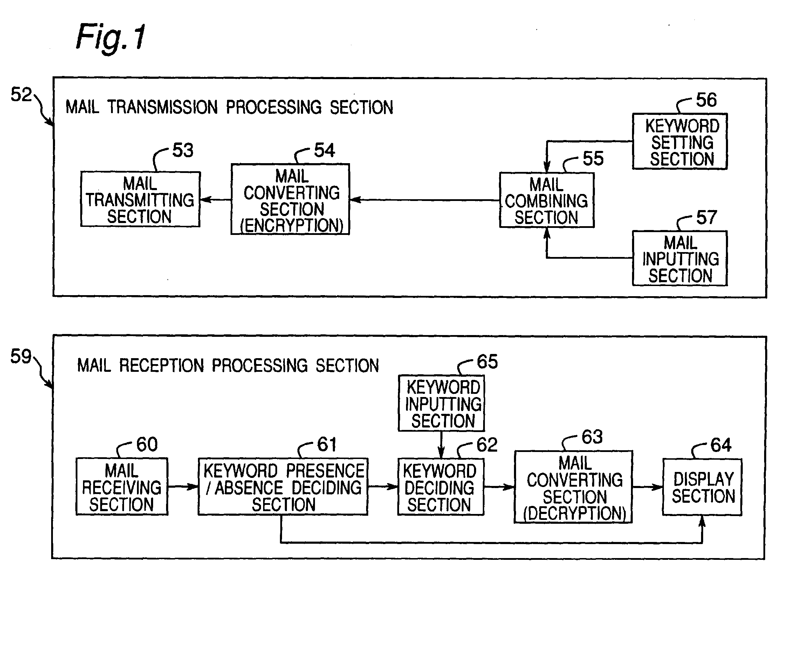

Fig. 1 is a block diagram showing the construction of the embodiment shown in Fig. 2 in the form of functional blocks, and this is constructed roughly of a mail transmission processing section 52 and a mail reception processing section 59.

The mail transmission processing section 52 is a block for transmitting an electronic mail. For this reason, there are provided a mail transmitting section 53, a mail converting section 54, a mail combining section 55, a keyword setting section 56 and a mail inputting section 57. The mail converting section 54, mail combining section 55, keyword setting section 56 and mail inputting section 57 are the blocks that are stored in the RAM 8 and principally constructed of a program to be executed by the CPU 4.

The mail reception processing section 59 is a block for receiving an electronic mail. For this purpose, the section 59 includes a mail receiving section 60, a keyword presence/absence deciding section 61, a keyword inputting section 65, a keyword deciding section 62, a mail converting section 63 and a display section 64. The keyword presence/absence deciding section 61, keyword deciding section 62, mail converting section 63, display section 64 and keyword inputting section 65 are the blocks that are stored in the RAM 8 and principally constructed of the program to be executed by the CPU 4.

The mail inputting section 57 is a block for creating the mail text of an electronic mail by means of the keyboard 11 or the like. Various parameters (connection destination, user ID, password, etc.) for exchanging communications with the mail server are inputted.

The keyword setting section 56 is a block for executing inputting and setting of a keyword to be attached to the electronic mail formed by the mail inputting section 57 by means of the keyboard 11 or the like. A keyword setting range with respect to the mail text is inputted. The mail combining section 55 is a block for attaching the keyword inputted and set by the keyword setting section 56 to the mail text inputted by the mail inputting section 57.

The mail converting section 54 is a block for encrypting the electronic mail which is transmitted from the mail combining section 55 and to which the keyword is attached. The mail transmitting section 53 is a block for transmitting the encrypted electronic mail to the mail server via the telephone line 1.

The mail receiving section 60 is a block that is connected to the mail server via the telephone line 1 and receives an electronic mail from the connected mail server. The keyword presence/absence deciding section 61 is a block for deciding whether or not a keyword is set in the electronic mail received by the mail receiving section 60. The keyword inputting section 65 is a block for inputting a keyword by means of the keyboard 11 or the like.

The keyword deciding section 62 is a block for deciding whether or not the keyword inputted by the keyword inputting section 65 coincides with the keyword that has been decided to be present by the keyword presence/absence deciding section 61. The mail converting section 63 is a block for decrypting into a text format only a portion that belongs to the electronic mail and has been decided to have keyword consistency by the keyword deciding section 62. The display section 64 is a block that includes the display device 5 and displays the electronic mail decrypted into the text format by the mail converting section 63.

It is to be noted that the principal object of the present invention is related to the display and storage of the mail text set in the specified area out of the mail text of an electronic mail. The mail text that has not been set in the specified area is handled similarly by the prior art technique. Therefore, according to the description provided hereinbelow, only the mail text set in the specified area will be described, and no description is provided for the mail text that has not been set in the specified area.

Therefore, the mail text that has not been set in the specified area may be displayed or not displayed in an arbitrary selection manner in either the case where the mail text set in the specified area is displayed or the case where the mail text set in the specified area is not displayed.

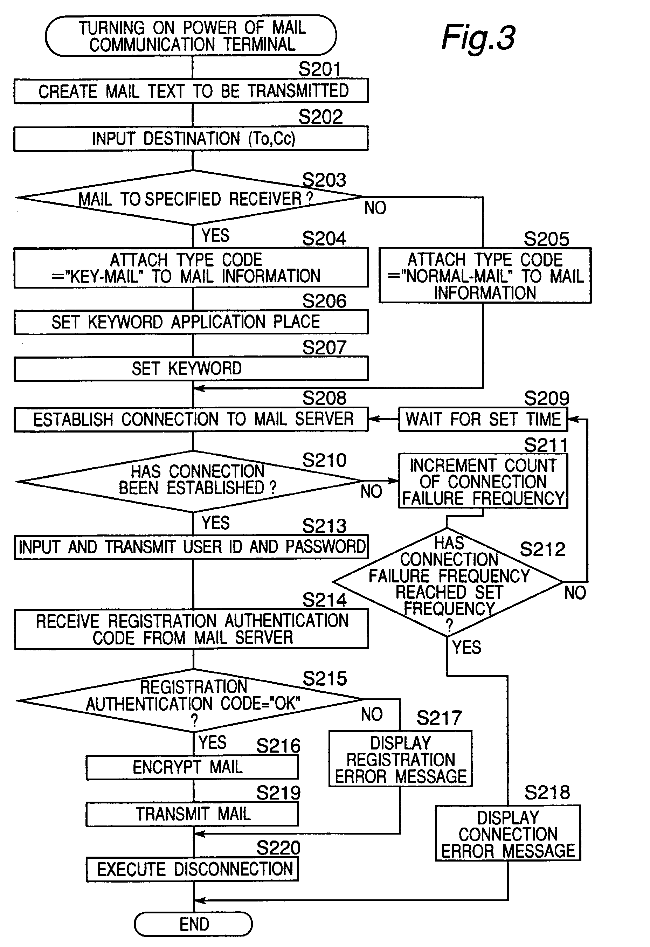

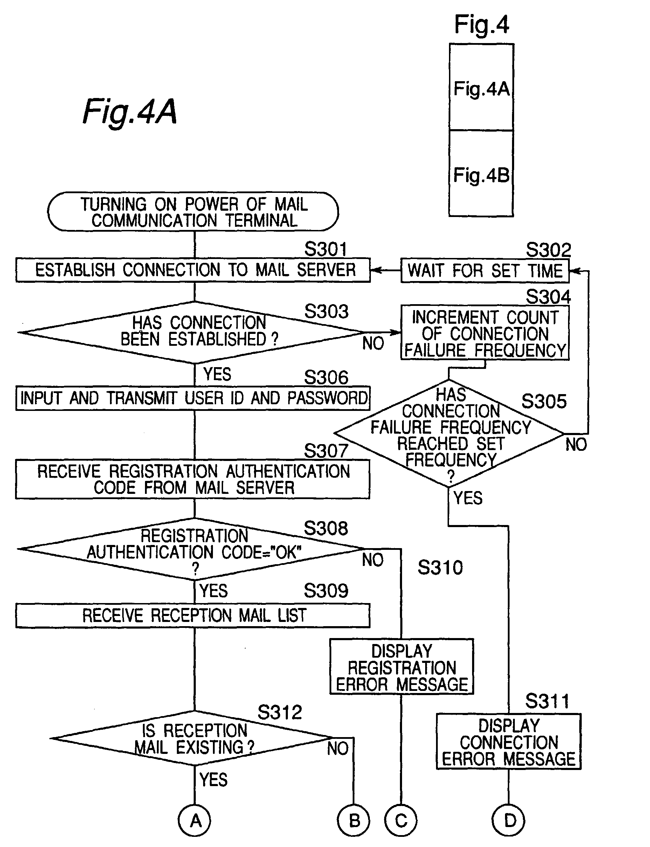

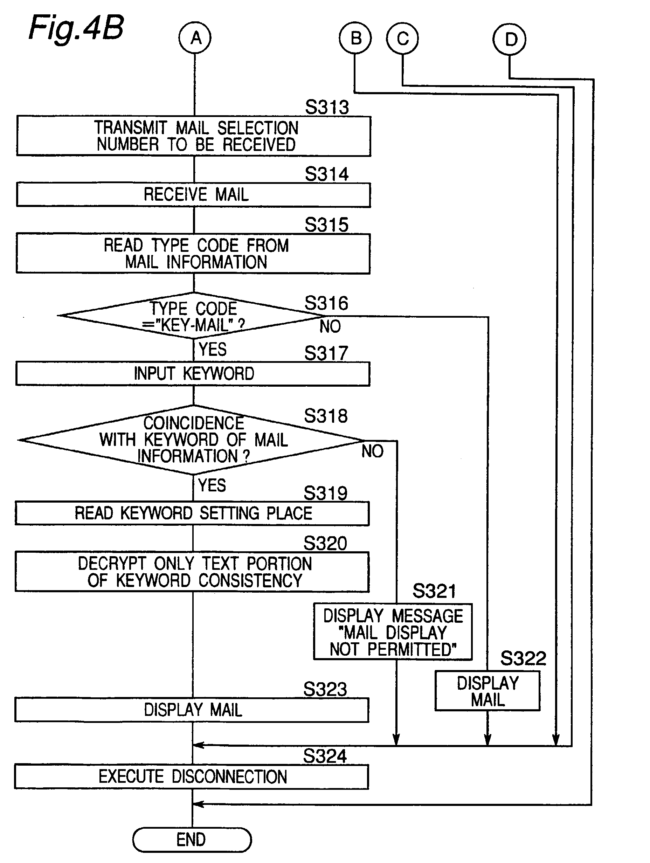

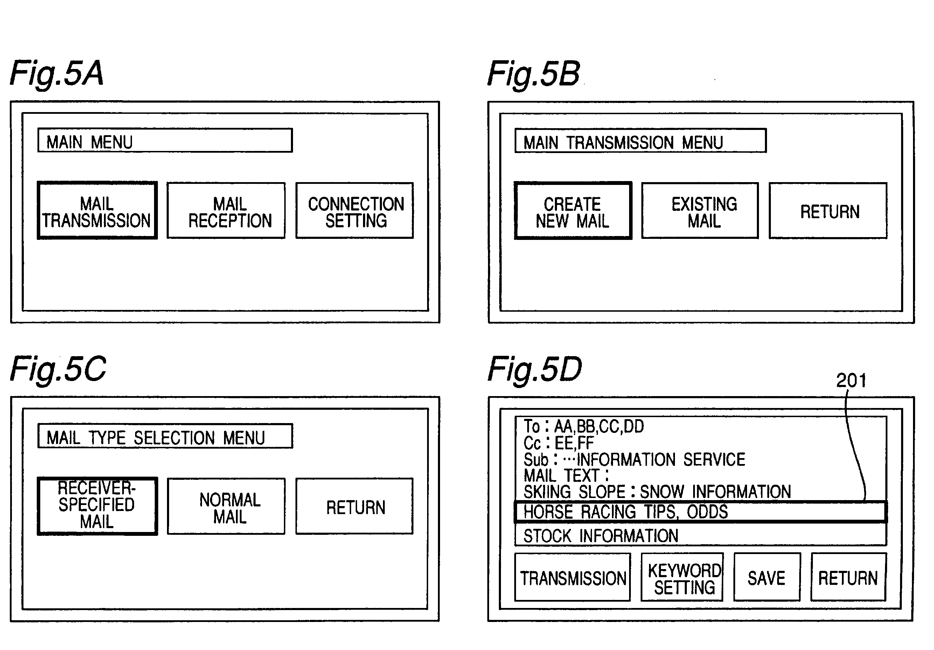

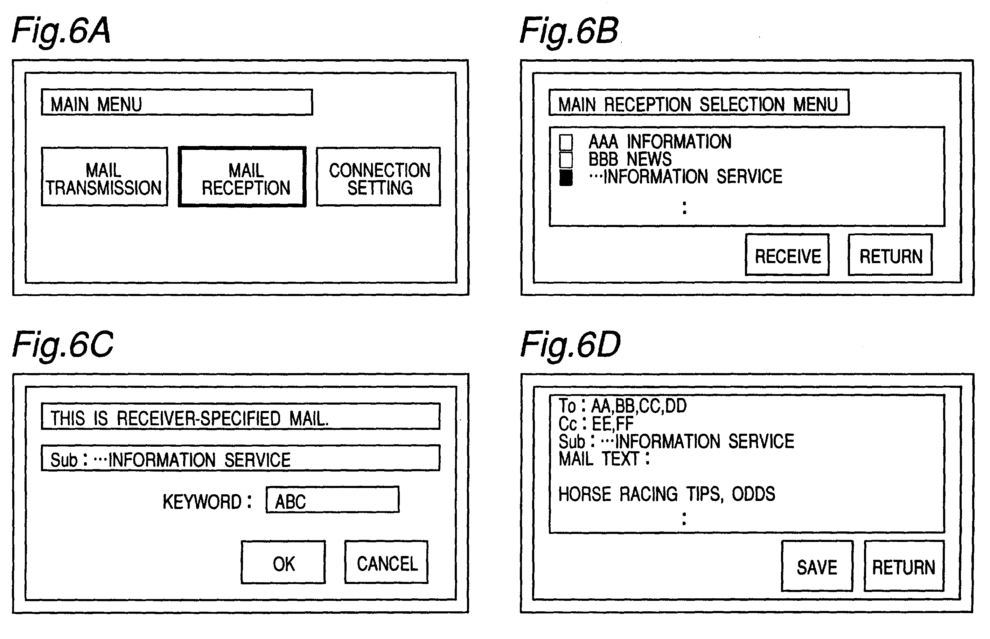

Fig. 3 is a flowchart showing the principal operation of the first embodiment in the transmission stage. Figs. 5A through 5H are explanatory views showing the screens of the display device 5 in the transmission stage. Fig. 4 is a flowchart showing the principal operation of the first embodiment in the reception stage. Figs. 6A through 6H are explanatory views showing the screens of the display device 5 in the reception stage. The first embodiment will be described in detail with reference to the above figures as the occasion demands.

First, reference is made to the case where an electronic mail is transmitted.

If the user sets this unit in an operating state, then a main menu as shown in Fig. 5A is displayed on the display device 5. In the state in which the main menu is displayed on the display device 5, the user selects "mail transmission". If the "mail transmission" is selected, then a mail transmission menu as shown in Fig. 5B is displayed on the display device 5.

The user selects " create new mail" in the state in which the mail transmission menu is displayed. Then, the user inputs a mail text by means of the mail inputting section 57 (step S201). The user also inputs a destination (To, Cc) (step S202). Assuming now that the user inputs the mail text (text including "horse racing information", "odds" and so on) under the title of "... information service", inputs "AA, BB, CC, DD" as the destination (To) and inputs "EE, FF" as the destination (Cc), then a mail type selection menu as shown in Fig. 5C is displayed on the display device 5.

If the user selects "receiver-specified mail" in the state in which the mail type selection menu is displayed, then "KEY-MAIL" is set as a type code representing the type of the electronic mail for the created mail text (steps S203 and S204). If the user selects "normal mail" in the state in which the mail type selection menu is displayed, then "NORMAL-MAIL" is set as a type code representing the type of the electronic mail for the created mail text (step S205). However, reference is made below to the case where the "receiver-specified mail" is selected.

If the user selects the "receiver-specified mail", then a screen shown in Fig. 5D is displayed on the display device 5. By using the keyword setting section 56 in this state, the user inputs a range that is desired to be displayed only for the specified receiver out of the created mail text. The range inputted in this stage becomes the range in which the keyword is set (specified area mentioned in the claims) (step S206). Fig. 5D shows the case where "horse racing tips, odds, ..." (the range enclosed by the solid lines 201) is designated as the keyword specified area.

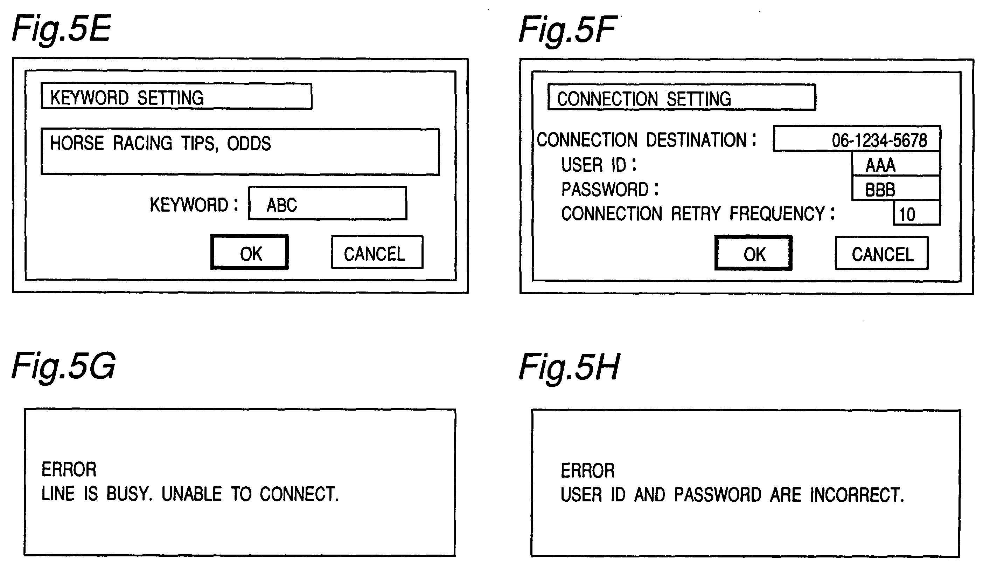

If the inputting of the keyword specified area is completed, then a screen as shown in Fig. 5E is displayed on the display device 5. By using the keyword setting section 56 in this state, the user inputs a keyword (step S207). Fig. 5E shows the case where "ABC" is inputted as the keyword.

If the keyword input is completed and "connection setting" is selected in the state in which the screen of Fig. 5A is displayed on the display device 5, then a screen as shown in Fig. 5F is displayed on the display device 5. By using the mail inputting section 57 in this state, the user inputs the connection destination of the electronic mail, the user ID for establishing connection, the password for establishing connection and the connection retry frequency (the number of times of retry for establishing connection) (this operation is also executed in step S207). Fig. 5F shows the case where the user inputs "06-1234-5678" as the connection destination, inputs "AAA" as the user ID, inputs "BBB" as the password and inputs a value of 10 as the connection retry frequency.

If the parameter setting for establishing connection of the electronic mail is completed, then the mail transmitting section 53 executes the operation of establishing connection to the mail server on the basis of the set contents (step S208). Then, the mail transmitting section 53 decides whether or not the establishing of connection has succeeded according to a reply from the mail server (step S210). If the establishing of connection is failed, then the mail transmitting section 53 increments by one the counter value for counting the number of times of failure in establishing connection (step S211).

Next, the retry frequency set as a parameter for establishing connection is compared with the count value of the counter. If the count value of the counter is smaller than the set retry frequency, then the operation of establishing connection to the mail server is executed again after waiting for a specified interval (steps S212, S209 and S208). Subsequently, the operations of the steps S208, S210 through S212 and S209 are repeated until the connection to the mail server is established. If the count value of the counter exceeds the set retry frequency during this repeat, then it is decided that the establishing of connection to the mail server failed, and the connecting operation is finished with the error message shown in Fig. 5G displayed on the display device 5 (step S218).

If a connection to the mail server is established during the operation of step S208, then the user ID and the password set on the display of Fig. 5F are transmitted to the mail server (step S213). Consequently, the transmitted contents are compared with the user information preparatorily registered on the mail server side. Then, a registration authentication code indicating the presence or absence of the registration is transmitted from the mail server side for the sake of authentication. Consequently, the mail transmitting section 53 receives this registration authentication code (step S214).

Next, the mail transmitting section 53 decides whether or not the registration authentication code transmitted from the mail server is "OK" indicating the presence of the registration. If the reply is not "OK", then it is decided that the registration is absent in the mail server, and an error message as shown in Fig. 5H is displayed on the display device 5 (steps S215 and S217).

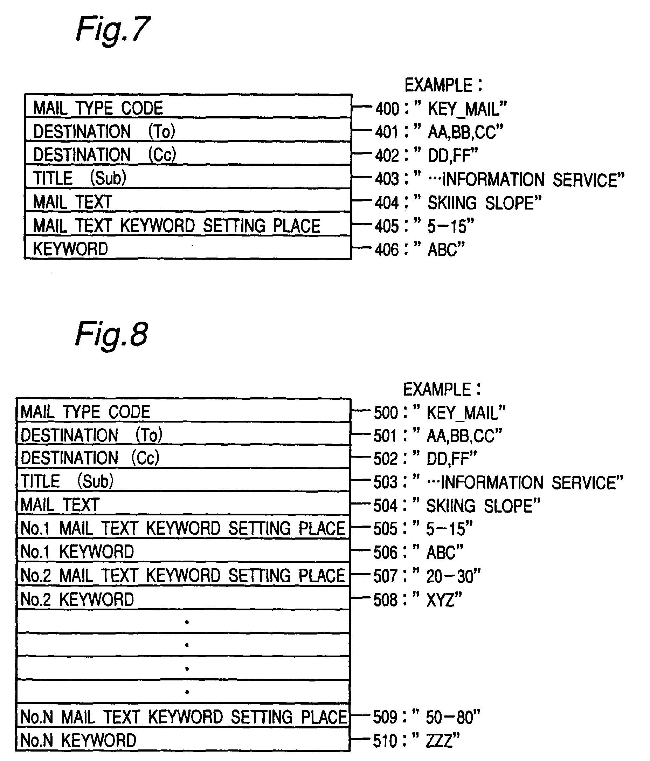

If the registration authentication code represents "OK", then the mail combining section 55 forms data conforming to the mail format shown in Fig. 7 by combining the type code of the mail, the designation, the title, the keyword specified area inside the mail text and the keyword with one another and transmits the data to the mail converting section 54. The mail converting section 54 encrypts the mail text in the keyword specified area out of the mail text (step S216).

Consequently, the electronic mail to which the type code of the mail, the designation, the title, the keyword specified area inside the mail text and the keyword are attached is transmitted from the mail transmitting section 53 to the mail server (step S219). If the transmission is completed, then the mail transmitting section 53 disconnects the connection to the mail server (step S220).

The description of the case where the electronic mail is transmitted ends, and reference is next made to the case where the electronic mail is received.

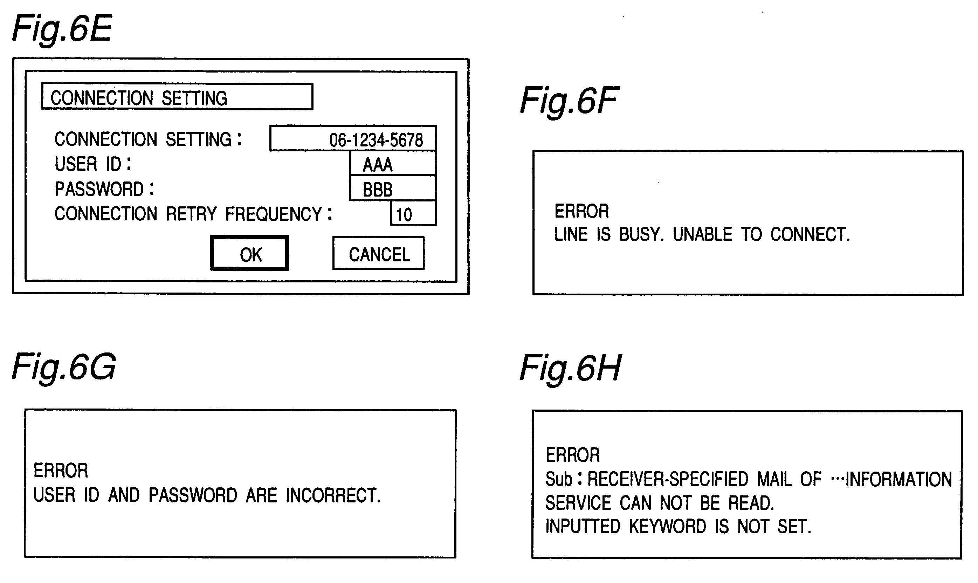

If the user sets the present unit in the operating state, then the main menu shown in Fig. 6A is displayed on the display device 5. The user selects "connection setting" in the state in which the main menu is displayed on the display device 5 and inputs the connection destination, the user ID, the password and the connection retry frequency in the state in which the screen of Fig. 6E is displayed. Fig. 6E shows the case where "06-1234-5678" is inputted as the connection destination, "AAA" is inputted as the user ID, "BBB" is inputted as the password and the value of 10 is inputted as the connection retry frequency.

If the inputting of these parameters is completed, then the mail receiving section 60 executes the operation of establishing connection to the mail server on the basis of the set contents (step S301). Then, the mail receiving section 60 decides whether or not the establishing of connection has succeeded according to a reply from the mail server (step S303). If the connection failed, then the mail receiving section 60 increments by one the count value of the counter for counting the number of times of failure in establishing connection (step S304).

Next, the retry frequency set as a parameter for establishing connection is compared with the count value of the counter. If the count value of the counter is smaller than the set retry frequency, then the operation of establishing connection to the mail server is executed again after waiting for a specified interval (steps S305, S302 and S301). Subsequently, the operations of the steps S301, S303 through S305 and S302 are repeated until the connection to the mail server is established. If the count value of the counter exceeds the set retry frequency during this repeat, then it is decided that the connection to the mail server failed, and the connecting operation is completed with the error message shown in Fig. 6F displayed on the display device 5 (step S311).

If a connection to the mail server is established during the operation of step S303, then the user ID and the password set on the display of Fig. 6E are transmitted to the mail server (step S306). Consequently, the transmitted contents are compared with the user information preparatorily registered on the mail server side. Then, a registration authentication code indicating the presence or absence of the registration is transmitted from the mail server side for the sake of authentication. Consequently, the mail receiving section 60 receives this registration authentication code (step S307).

Next, the mail receiving section 60 decides whether or not the registration authentication code transmitted from the mail server is "OK" indicating the presence of the registration. If the reply is not "OK", then it is decided that the registration is absent in the mail server, and the error message shown in Fig. 6G is displayed on the display device 5 (steps S308 and S310).

If the registration authentication code represents "OK", then the mail receiving section 60 receives an electronic mail list directed to the section 60 (step S309) and decides whether or not any received electronic mail exists (step S312). If a received electronic mail exists, then the mail receiving section 60 displays the list of the received electronic mail on the display device 5. Fig. 6B shows a screen that displays the list of the received electronic mails, indicating the case where three electronic mails of "AAA information", "BBB news" and "... information service" have been received.

The user selects an electronic mail of which the mail text is desired to be received from the display screen of the list shown in Fig. 6B. Assuming now that the "... information service" is selected, then the mail receiving section 60 transmits the selection number assigned to the "... information service" (step S313). Consequently, the mail server transmits mail information (electronic mail to which the keyword, the keyword specified area and so on are attached) conforming to the mail format shown in Fig. 7. Consequently, the mail receiving section 60 receives this mail information (step S314).

The keyword presence/absence deciding section 61 reads the type code included in the mail information received by the mail receiving section 60 (step S315). Then, it is decided whether or not the read type code is "KEY-MAIL" (step S316). If the type code is not the "KEY-MAIL", i.e., if the type code is "NORMAL-MAIL", then the keyword presence/absence deciding section 61 transmits the mail text in the received mail information to the display device 5. Consequently, the mail text is displayed on the display device 5 (step S232). The mail receiving section 60 disconnects the connection to the mail server (step S324).

If the type code included in the mail information is the "KEY-MAIL", then the program flow proceeds from step S316 to S317. Consequently, the keyword presence/absence deciding section 61 displays the contents shown in Fig. 6C on the display device 5 so as to indicate that the electronic mail is the electronic mail provided with a keyword. In the state in which the screen of Fig. 6C is displayed, the user inputs a keyword by means of the keyword inputting section 65 (step S317). Fig. 6C shows the case where "ABC" is inputted as a keyword.

If the inputting of the keyword is completed, then the keyword deciding section 62 compares the inputted keyword with the keyword included in the mail information. If the result of comparison indicates inconsistency, then the keyword deciding section 62 displays the message shown in Fig. 6H on the display device 5 (step S321). The mail receiving section 60 disconnects the connection to the mail server (step S324).

If the result of comparison of the keywords indicates consistency, then the mail converting section 63 decrypts the keyword specified area and transmits the resultant to the display device 5 (step S320). Consequently, the mail text is displayed on the display device 5 as shown in Fig. 6D. The mail receiving section 60 disconnects the connection to the mail server (step S324).

The mail format of Fig. 7 referred to as above is the mail format corresponding to the inventive aspect mentioned in the claim 1.

If this mail format is described in detail with reference to the example of Fig. 7, then the "KEY-MAIL" of the type code 400 indicates an electronic mail provided with a set keyword. According to the display, a destination (To) 401 is "AA, BB, CC", while a destination (Cc) 402 is "EE, FF". An electronic mail title (Sub) 403 is "... information service", while a mail text 404 is "skiing slope".

A keyword specified area 405 is "5-15" indicating that the keyword specified area covers the 5-th through 15-th lines of the mail text. A keyword 406 is "ABC".

The mail format shown in Fig. 8 is a mail format corresponding to the inventive aspect mentioned in the claim 2, indicating a construction capable of designating a plurality of places for the keyword specified area.

If this mail format is described in detail with reference to the example of Fig. 8, then the "KEY-MAIL" of a type code 500 indicates an electronic mail provided with a set keyword. According to the display, a destination (To) 501 is "AA, BB, CC", while a destination (Cc) 502 is "EE, FF". An electronic mail title (Sub) 503 is "... information service", while a mail text 504 is "skiing slope".

A keyword specified area 505 is "5-15" indicating that the keyword specified area covers the 5-th through 15-th lines of the mail text. A keyword 506 is a keyword corresponding to the specified area of the 5-th through 15-th lines, indicating that "ABC" is set as the keyword.

A keyword specified area 507 is "20-30" indicating that the keyword specified area covers the 20-th through 30-th lines of the mail text. A keyword 508 is a keyword corresponding to the specified area of the 20-th through 30-th lines, indicating that "XYZ" is set as the keyword.

A keyword specified area 509 is "50-80" indicating that the keyword specified area covers the 50-th through 80-th lines of the mail text. A keyword 510 is a keyword corresponding to the specified area of the 50-th through 80-th lines, indicating that "ZZZ" is set as the keyword.

Therefore, if, for example, "ABC" is inputted as the keyword when the mail format has the construction shown in Fig. 8, then the range in which no specified area is set and the 5-th through 15-th lines of the mail text are displayed on the display device 5. If "XYZ" is inputted as the keyword, then the range in which no specified area is set and the 20-th through 30-th lines of the mail text are displayed on the display device 5. If "ZZZ" is inputted as the keyword, then the range in which no specified area is set and the 50-th through 80-th lines of the mail text are displayed on the display device 5.

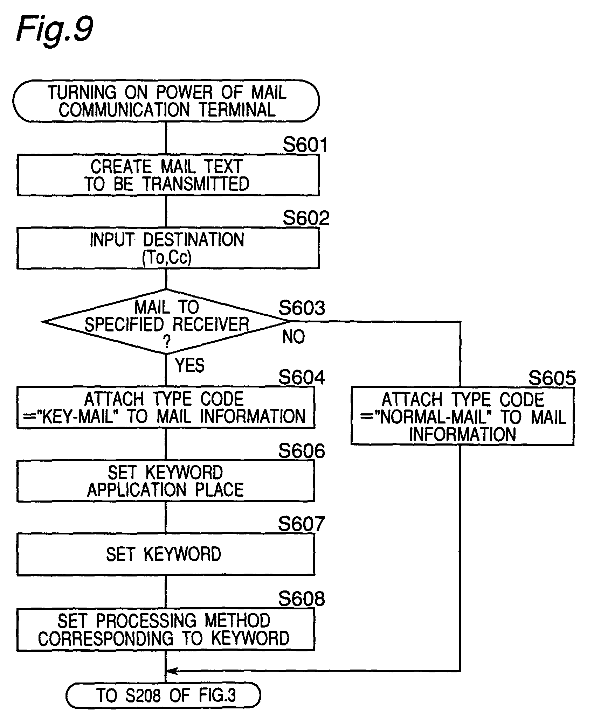

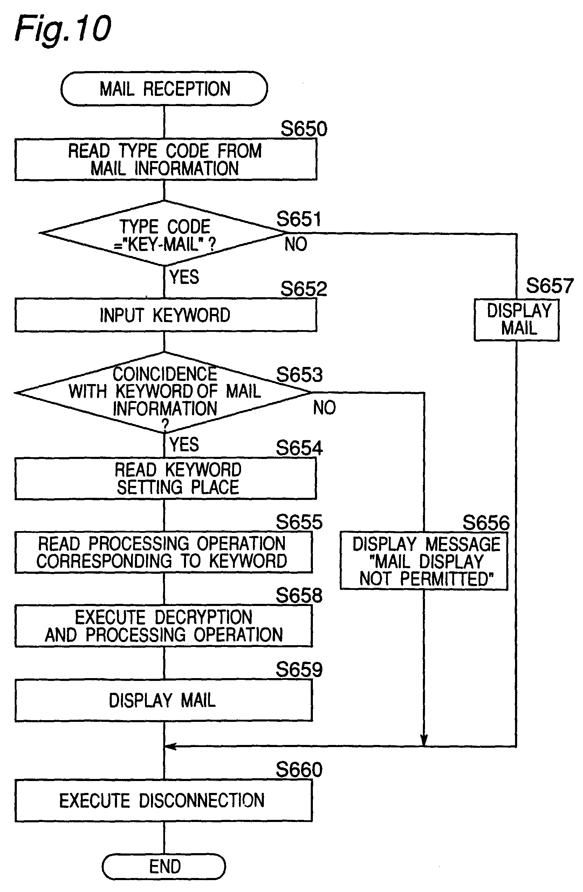

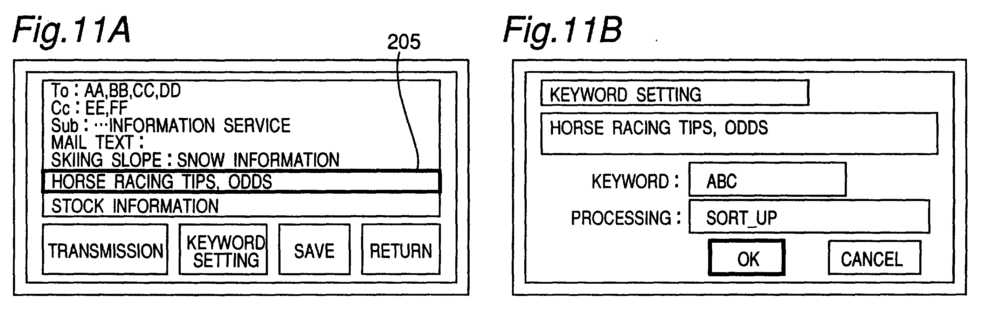

Fig. 9 shows a flowchart showing the principal operation of the second embodiment in the transmission stage. Figs. 11A and 11B are explanatory views showing the screens of the display device 5 in the transmission stage. Fig. 10 is a flowchart showing the principal operation of the second embodiment in the reception stage. The second embodiment will be described in detail with reference to the above figures as the occasion demands (the electrical construction of the second embodiment is shown in Fig. 2 when illustrated as a functional block diagram).

The second embodiment roughly has a construction for processing the specified area according to a processing operation attached to the mail text when displaying the specified area provided with the set keyword and displaying this result of processing.

Reference is first made to the case where an electronic mail is transmitted.

If the user sets the present unit in the operating state, then the main menu shown in Fig. 5A is displayed on the display device 5. The user selects "mail transmission" in the state in which the main menu is displayed on the display device 5. If the "mail transmission^{"} is selected, then the mail transmission menu shown in Fig. 5B is displayed on the display device 5.

The user selects "create new mail" in the state in which the mail transmission menu is displayed. Then, the user inputs a mail text by using the mail inputting section 57 (step S601). The user also inputs the destination (To, Cc) (step S602). Assuming now that the user inputs the mail text (text including "horse racing information", "odds" and so on) under the title of "... information service", inputs "AA, BB, CC, DD" as the destination (To) and inputs "EE, FF" as the destination (Cc), then the mail type selection menu shown in Fig. 5C is displayed on the display device 5.

If the user selects the "receiver-specified mail" in the state in which the mail type selection menu is displayed, then the "KEY-MAIL" is set as a type code representing the type of the electronic mail for the created mail text (steps S603 and S604). If the user selects the "normal mail" in step S603, then the "NORMAL-MAIL" is set as a type code representing the type of the electronic mail (step S605).

If the user selects the "receiver-specified mail", then a screen as shown in Fig. 11A is displayed on the display device 5. By using the keyword setting section 56 in this state, the user selects the range that is desired to be displayed only for the specified receiver out of the created mail text. The range selected in this stage becomes the specified area in which the keyword is set (step S606). Fig. 11A shows the case where "horse racing tips, odds, ..." (the range enclosed by the solid lines 205) is designated as the keyword specified area.

If the inputting of the keyword specified area is completed and "keyword setting" is selected, then a keyword setting screen as shown in Fig. 11B is displayed on the display device 5. By using the keyword setting section 56 in this state, the user inputs a keyword (step S607). Then, the user inputs a processing operation method for the specified area of the mail text (step S608). Fig. 11B shows the case where "ABC" is inputted as the keyword and "SORT-UP" is inputted as the processing operation. The processing operation of "SORT-UP" means sorting in the descending order of numerical values and the displaying of the result of sorting.

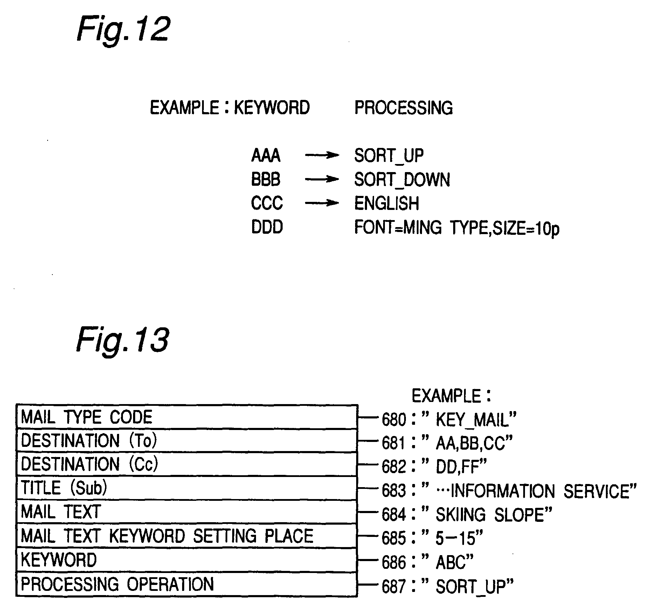

The subsequent operations are the operations of steps S208 through S220 shown in Fig. 3. That is, the operations are to connect the present unit to the mail server and transmit to the mail server an electronic mail obtained by attaching a type code 680, a destination (To) 681, a destination (Cc) 682, a title 683, a specified area 685, a keyword 686 and a processing operation 687 to a mail text 684 as shown in Fig. 13.

Fig. 12 shows examples of the keyword and the processing operation. There are prepared processing operations of "SORT-UP", "SORT-DOWN", "ENGLISH", "FONT=MING TYPE, SIZE=10" and so on.

In detail, the processing operation of "SORT-UP" coupled with the keyword "AAA" means the sorting in the descending order of numerical values of the specified area corresponding to the "AAA" and the subsequent displaying of the resultant. The processing operation of "SORT-DOWN" coupled with a keyword "BBB" means the sorting in the ascending order of numerical values of the specified area corresponding to the "BBB" and the subsequent displaying of the resultant.

The processing operation of "ENGLISH" coupled with a keyword "CCC" means the translating of the specified area corresponding to the keyword "CCC" into English and the subsequent displaying of the resultant. The processing operation of "FONT=MING TYPE, SIZE=10" coupled with a keyword "DDD" means the displaying of the specified area corresponding to the keyword "DDD" with the font of Ming type of a size of 10p.

The description of the case where the electronic mail is transmitted ends, and reference is next made to the case where the electronic mail is received.

The mail information is received from the mail server by using the same procedures as those of the steps S301, S303, S306 through S309 and S312 through S314 of Fig. 4. Subsequently, the keyword presence/absence deciding section 61 reads the type code included in the mail information received by the mail receiving section 60 (step S650 of Fig. 10). Then, it is decided whether or not the read type code is "KEY-MAIL" (step S651). If the type code is not the "KEY-MAIL", i.e., if the type code is the "NORMAL-MAIL", then the keyword presence/absence deciding section 61 transmits the mail text in the received mail information to the display device 5. Consequently, the mail text is displayed on the display device 5 (step S657). The mail receiving section 60 disconnects the connection to the mail server (step S660).

If the type code included in the mail information is the "KEY-MAIL", then the program flow proceeds from step S651 to S652. Consequently, the keyword presence/absence deciding section 61 displays the contents shown in Fig. 6C on the display device 5 so as to indicate that the electronic mail is an electronic mail provided with a keyword. In the state in which the screen of Fig. 6C is displayed, the user inputs a keyword by means of the keyword inputting section 65 (step S652). Fig. 6C shows the case where "ABC" is inputted as a keyword.

If the inputting of the keyword is completed, then the keyword deciding section 62 compares the inputted keyword with the keyword included in the mail information. If the result of comparison indicates inconsistency, then the keyword deciding section 62 displays the message shown in Fig. 6H on the display device 5 (step S656). The mail receiving section 60 disconnects the connection to the mail server (step S660).

If the result of comparison of the keywords indicates consistency, then the mail converting section 63 reads the keyword specified area (step S654). The mail converting section 63 reads the processing method from the mail information (step S655). The mail converting section 63 then decrypts the read specified area and executes the read processing operation (step S658). Then, the text obtained through the decryption and processing operation is transmitted to the display device 5 and displayed (step S659). The mail receiving section 60 disconnects the connection to the mail server (step S660).

Therefore, in the case where the relations between the keywords and the processing operations are as shown in Fig. 12, the mail texts in the specified area in which the keyword "AAA" is set as the keyword are displayed after being sorted in the descending order of numerical values. The mail texts in the specified area in which the keyword "BBB" is set are displayed after being sorted in the ascending order of numerical values.

The mail texts in specified area in which the keyword "CCC" is set are displayed after being translated into English. The mail text in specified area in which the keyword "DDD" is set is displayed with the font of Ming type of the size of 10p.

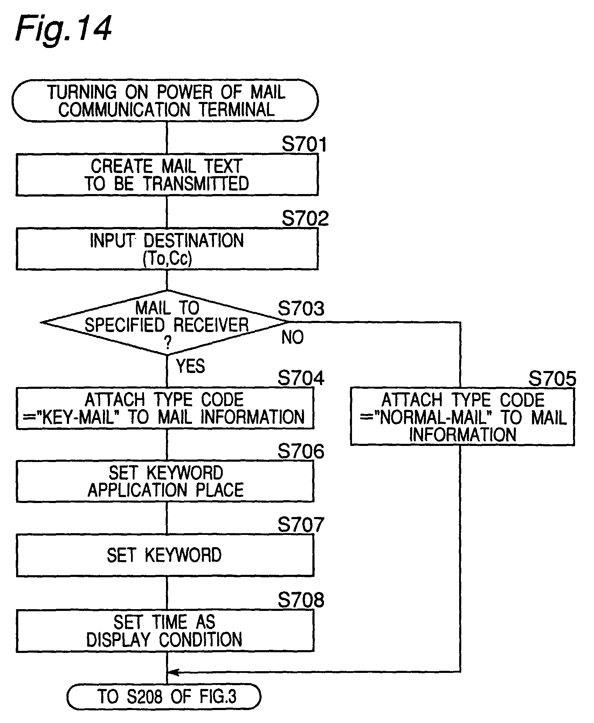

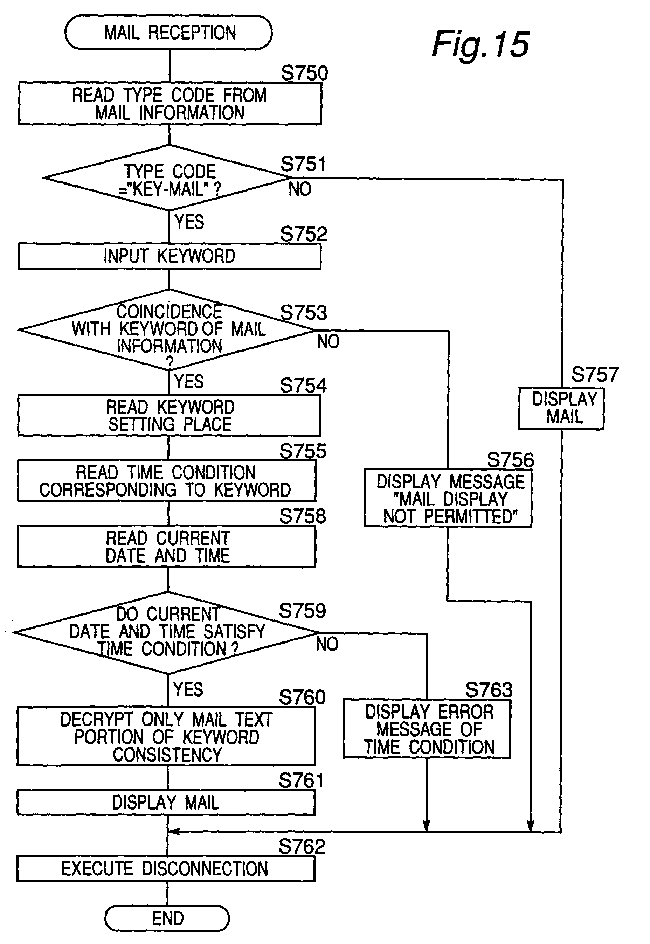

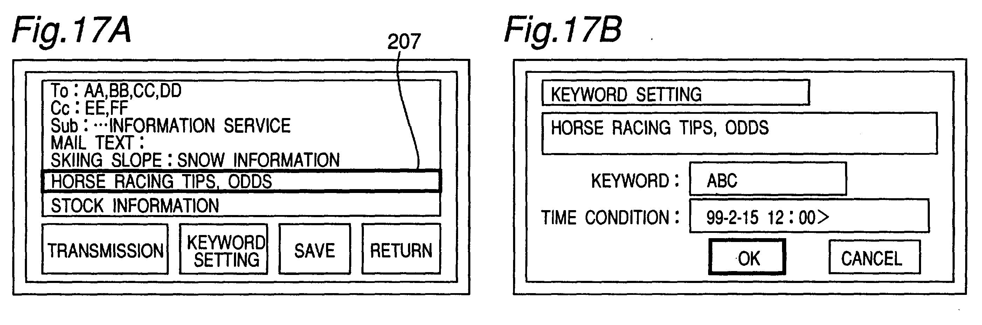

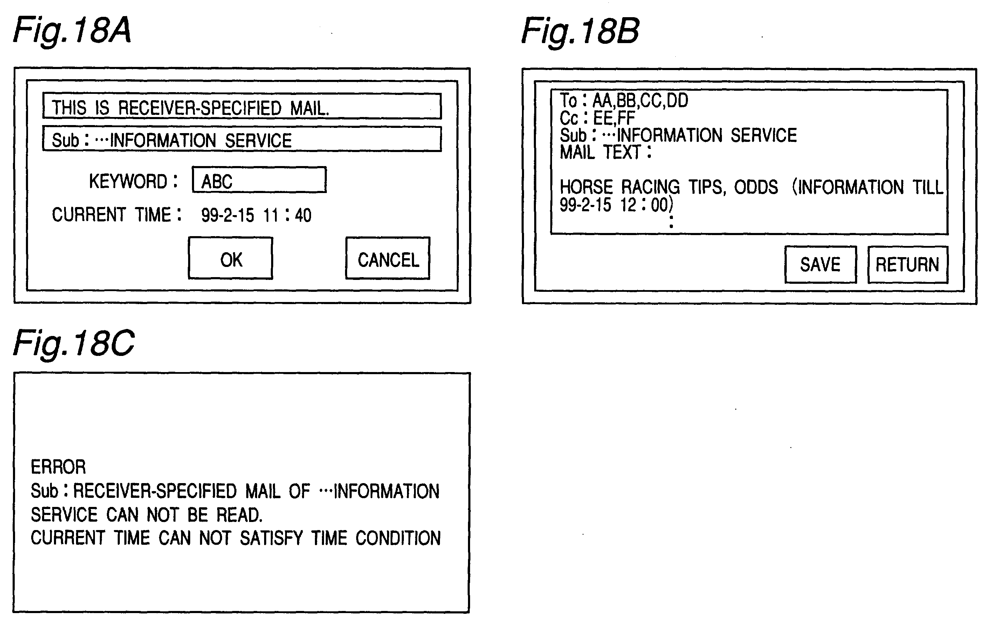

Fig. 14 shows a flowchart showing the principal operation of the third embodiment in the transmission stage. Figs. 17A and 17B are explanatory views showing the screens of the display device 5 in the transmission stage. Fig. 15 is a flowchart showing the principal operation of the third embodiment in the reception stage. Figs. 18A through 18C are explanatory views showing the screens of the display device 5 in the reception stage. The third embodiment will be described in detail with reference to the above figures as the occasion demands (the electrical construction of the third embodiment is shown in Fig. 2 when illustrated as a functional block diagram).

The third embodiment roughly has a construction for displaying the specified area in which the keyword is set only when the time at which an electronic mail is received satisfies a time condition attached to the mail text.

Reference is first made to the case where an electronic mail is transmitted.

If the user sets the present unit in the operating state, then the main menu shown in Fig. 5A is displayed on the display device 5. The user selects "mail transmission" in the state in which the main menu is displayed on the display device 5. If the "mail transmission" is selected, then the mail transmission menu shown in Fig. 5B is displayed on the display device 5.

The user selects "create new mail" in the state in which the mail transmission menu is displayed. Then, the user inputs a mail text by using the mail inputting section 57 (step S701). The user also inputs the destination (To, Cc) (step S702). Assuming now that the user inputs the mail text (text including "horse racing information", "odds" and so on) under the title of "... information service", inputs "AA, BB, CC, DD" as the destination (To) and inputs "EE, FF" as the destination (Cc), then a mail type selection menu as shown in Fig. 5C is displayed on the display device 5.

If the "receiver-specified mail" is selected in the state in which the mail type selection menu is displayed, then the "KEY-MAIL" is set as a type code representing the type of the electronic mail for the created mail text (steps S703 and S704). If the "normal mail" is selected in step S703, then the "NORMAL-MAIL" is set as a type code representing the type of the electronic mail (step S705).

If the "receiver-specified mail" is selected, then the screen shown in Fig. 17A is displayed on the display device 5. By using the keyword setting section 56 in this state, the user selects the range that is desired to be displayed only for the specified receiver out of the created mail text. The range selected in this stage becomes the specified area in which the keyword is set (step S706). Fig. 17A shows the case where "horse racing tips, odds, ..." (the range enclosed by the solid lines 207) is designated as the keyword specified area.

If the inputting of the keyword specified area is completed and "keyword setting" is selected, then the keyword setting screen shown in Fig. 17B is displayed on the display device 5. By using the keyword setting section 56 in this state, the user inputs a keyword (step S707). Then, the user inputs a time condition (step S708). Fig. 17B shows the case where "ABC" is inputted as the keyword and "99-2-15 12:00〉" is inputted as the time condition.

The time condition of "99-2-15 12:00〉" means that the specified area is displayed in the case where the time at which the transmitted electronic mail is received by the mail server is before 12:00 on February 15, 1999 and that the specified area is not displayed in the case where the time at which the electronic mail is received is at or after 12:00 on February 15, 1999.

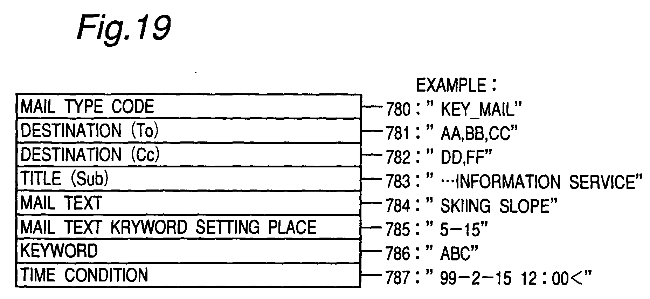

The subsequent operations are the operations of steps S208 through S220 shown in Fig. 3. That is, the operations are to connect the present unit to the mail server and transmit to the mail server an electronic mail obtained by attaching a type code 780, a destination (To) 781, a destination (Cc) 782, a title 783, a specified area 785, a keyword 786 and a time condition 787 to a mail text 784 as shown in Fig. 19.

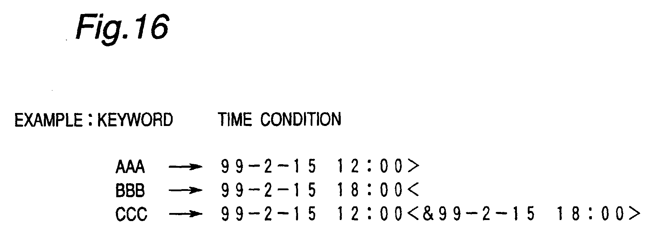

Fig. 16 shows examples of the keyword and the time condition. That is, the condition of "99-2-15 12:00〉" coupled with the keyword "AAA" means that the specified area corresponding to the "AAA" is displayed in the case where the time at which the electronic mail is received is before 12:00 on February 15, 1999 and that the specified area corresponding to the keyword "AAA" is not displayed in the case where the time at which the electronic mail is received is at or after 12:00 on February 15, 1999.

The condition of "99-2-15 18:00〈" coupled with the keyword "BBB" means that the specified area corresponding to the keyword "BBB" is displayed in the case where the time at which the electronic mail is received after 18:00 on February 15, 1999 and that the specified area corresponding to the keyword "BBB" is not displayed in the case where the time at which the electronic mail is received at or before 18:00 on February 15, 1999.

The time condition of "99-2-15 12:00〈&99-2-15 18:00〉" means that the specified area corresponding to the keyword "CCC" is displayed in the case where the time at which an electronic mail is received after 12:00 on February 15, 1999 and before 18:00 on February 15, 1999 and that the specified area corresponding to the keyword "CCC" is not displayed in the other case.

The description of the case where the electronic mail is transmitted ends, and reference is next made to the case where the electronic mail is received.

The mail information is received from the mail server by using the same procedures as those of the steps S301, S303, S306 through S309 and S312 through S314 of Fig. 4. Subsequently, the keyword presence/absence deciding section 61 reads the type code included in the mail information received by the mail receiving section 60 (step S750 of Fig. 15). Then, it is decided whether or not the read type code is the "KEY-MAIL" (step S751). If the type code is not the "KEY-MAIL", i.e., if the type code is the "NORMAL-MAIL", then the keyword presence/absence deciding section 61 transmits the mail text in the received mail information to the display device 5. Consequently, the mail text is displayed on the display device 5 (step S757). The mail receiving section 60 disconnects the connection to the mail server (step S762).

If the type code included in the mail information is the "KEY-MAIL", then the program flow proceeds from step S751 to S752. Consequently, the keyword presence/absence deciding section 61 displays the contents shown in Fig. 18A on the display device 5 so as to indicate that the electronic mail is the electronic mail provided with a keyword. In the state in which the screen of Fig. 18A is displayed, the user inputs a keyword by means of the keyword inputting section 65 (step S752). Fig. 18A shows the case where "ABC" is inputted as the keyword.

If the inputting of the keyword is completed, then the keyword deciding section 62 compares the inputted keyword with the keyword included in the mail information. If the result of comparison indicates inconsistency, then the keyword deciding section 62 displays a message as shown in Fig. 18C on the display device 5 (step S756). The mail receiving section 60 disconnects the connection to the mail server (step S762).

If the result of comparison of the keywords indicates consistency, then the mail converting section 63 reads the keyword specified area (step S754). The mail converting section 63 reads the time condition from the mail information (step S755). The mail converting section 63 reads the current time from the clock 10 (step S758). Then, the time condition read from the mail information is compared with the current time indicated by the clock 10 (step S759).

If the current time satisfies the time condition, then a text obtained by decrypting the specified area of keyword consistency is transmitted to the display device 5 and displayed (steps S760 and S761). The mail receiving section 60 disconnects the connection to the mail server (step S762). If the current time does not satisfy the time condition through the decision of step S759, then the screen of Fig. 18C is displayed on the display device 5 (step S763). The connection to the mail server is disconnected (step S762).

On the basis of the above, when the display at the time of keyword input is shown in Fig. 18A, meaning that the current time is 11:40 on February 15, 1999, which is before the time condition of 12:00 on February 15, 1999. Therefore, the contents shown in Fig. 18B are displayed on the display device 5.

If the mail format shown in Fig. 19 is described in detail with reference to the example of Fig. 19, then the "KEY-MAIL" of the type code 780 indicates an electronic mail provided with a keyword. According to the display, a destination (To) 781 is "AA, BB, CC, DD", while a destination (Cc) 782 is "EE, FF". An electronic mail title (Sub) 783 is "... information service", while a mail text 784 is "skiing slope".

A keyword specified area 785 is "5-15" indicating that the keyword specified area covers the 5-th through 15-th lines of the mail text. A keyword 786 is "ABC". A time condition 787 is "99-2-15 12:00〉".

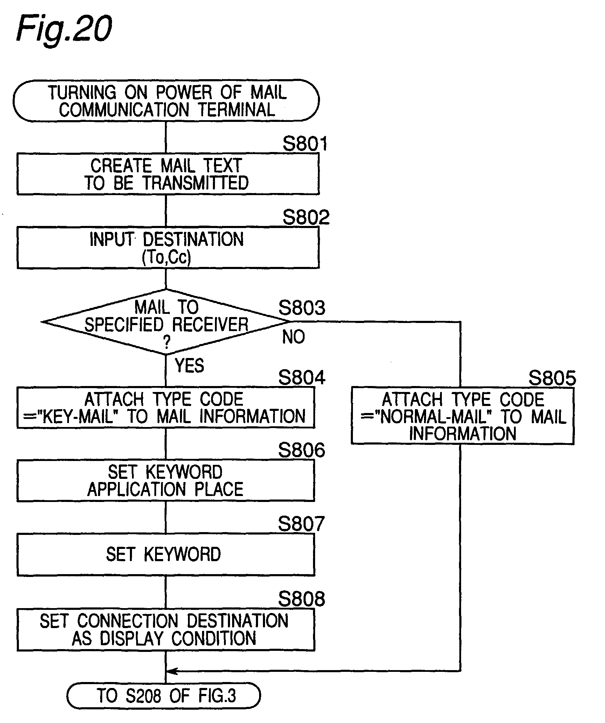

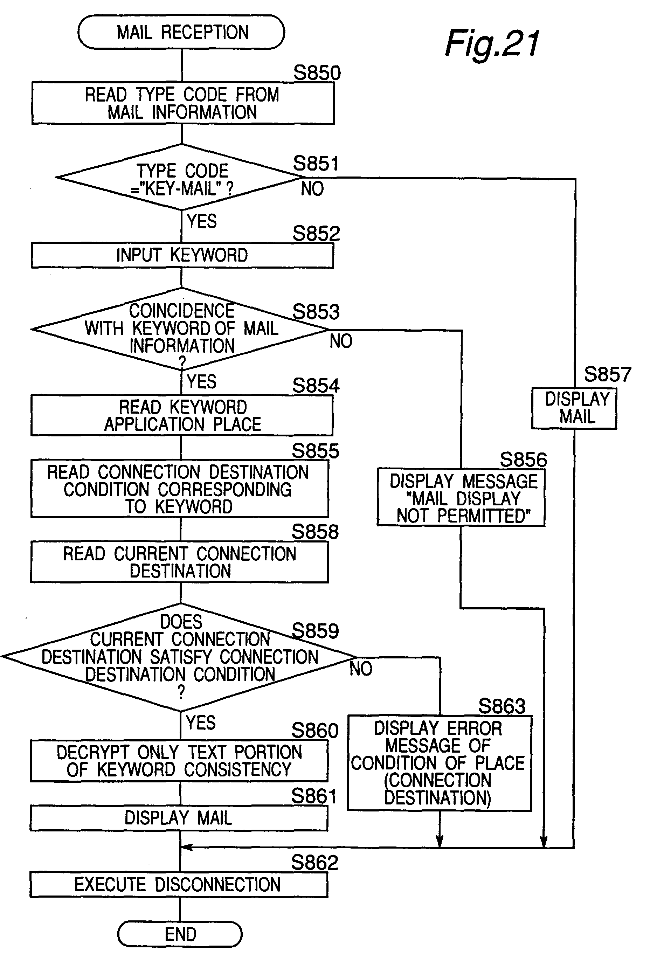

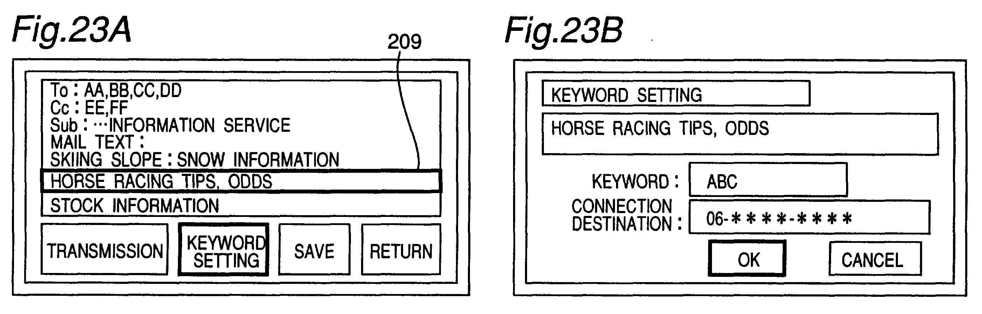

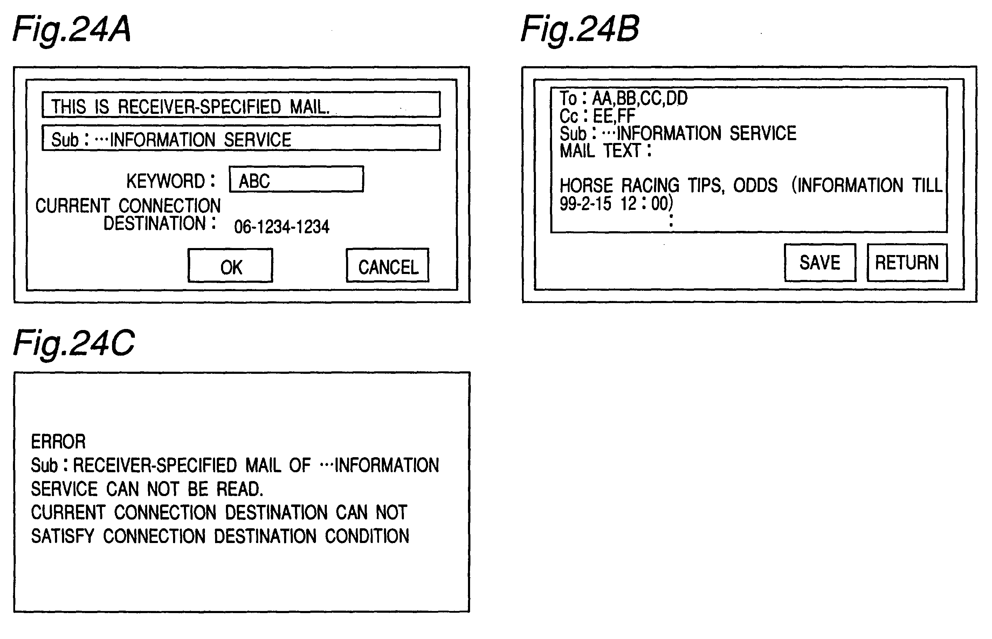

Fig. 20 shows a flowchart showing the principal operation of the fourth embodiment in the transmission stage. Figs. 23A and 23B are explanatory views showing the screens of the display device 5 in the transmission stage. Fig. 21 is a flowchart showing the principal operation of the fourth embodiment in the reception stage. Figs. 24A through 24C are explanatory views showing the screens of the display device 5 in the reception stage. The fourth embodiment will be described in detail with reference to the above figures as the occasion demands (the electrical construction of the fourth embodiment is shown in Fig. 2 when illustrated as a functional block diagram).

The fourth embodiment roughly has a construction for displaying the specified area in which the keyword is set only when the connection designation data (telephone number) inputted for establishing connection to the originator (mail server) of the electronic mail coincides with the connection destination condition attached to the mail text.

Reference is first made to the case where an electronic mail is transmitted.

If the user sets the present unit in the operating state, then the main menu shown in Fig. 5A is displayed on the display device 5. The user selects "mail transmission" in the state in which the main menu is displayed on the display device 5. If the "mail transmission" is selected, then the mail transmission menu shown in Fig. 5B is displayed on the display device 5.

The user selects "create new mail" in the state in which the mail transmission menu is displayed. Then, the user inputs a mail text by using the mail inputting section 57 (step S801). The user also inputs the destination (To, Cc) (step S802). Assuming now that the user inputs the mail text (text including "horse racing information", "odds" and so on) under the title of "... information service", inputs "AA, BB, CC, DD" as the destination (To) and inputs "EE, FF" as the destination (Cc), then the mail type selection menu shown in Fig. 5C is displayed on the display device 5.

If the "receiver-specified mail" is selected in the state in which the mail type selection menu is displayed, then the "KEY-MAIL" is set as a type code representing the type of the electronic mail for the created mail text (steps S803 and S804). If the "normal mail" is selected in step S803, then the "NORMAL-MAIL" is set as a type code representing the type of the electronic mail (step S805).

If the "receiver-specified mail" is selected, then the screen shown in Fig. 23A is displayed on the display device 5. By using the keyword setting section 56 in this state, the user selects the range that is desired to be displayed only for the specified receiver out of the created mail text. The range selected in this stage becomes the specified area in which the keyword is set (step S806). Fig. 23A shows the case where "horse racing tips, odds, ..." (the range enclosed by the solid lines 209) is designated as the keyword specified area.

If the inputting of the keyword specified area is completed and the "keyword setting" is selected, then a keyword setting screen as shown in Fig. 23B is displayed on the display device 5. By using the keyword setting section 56 in this state, the user inputs a keyword (step S807). Then, the user inputs the connection destination condition (step S808). Fig. 23B shows the case where "ABC" is inputted as the keyword and "06-****-****" is inputted as the connection destination condition.

The connection destination condition of "06-****-****" means that any connection destination of which the telephone number starts from "06" satisfies the condition ("*" means an arbitrary number) .

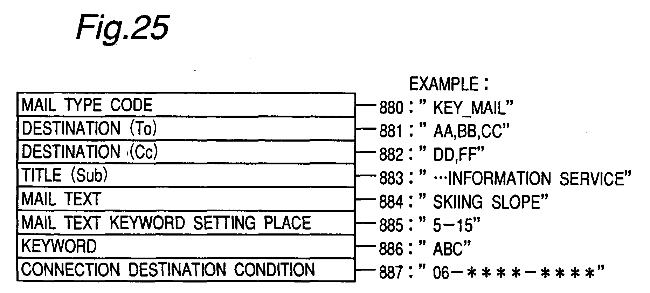

The subsequent operations are the operations of steps S208 through S220 shown in Fig. 3. That is, the operations are to connect the present unit to the mail server and transmit to the mail server an electronic mail obtained by attaching a type code 880, a destination (To) 881, a destination (Cc) 882, a title 883, a specified area 885, a keyword 886 and a connection destination condition 887 to a mail text 884 as shown in Fig. 25.

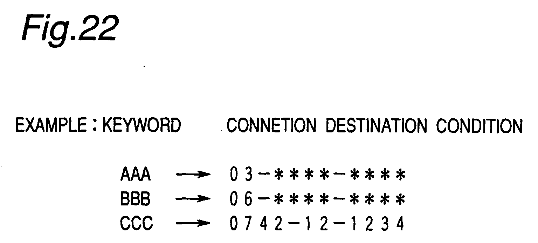

Fig. 22 shows examples of the keyword and the connection destination condition. That is, the connection destination condition of "03-****-****" coupled with the keyword "AAA" means that the specified area corresponding to the "AAA" is displayed in the case where the telephone number of the mail server connected via the telephone line 1 is a telephone number starting from "03" and that the specified area corresponding to the keyword "AAA" is not displayed in the case where the telephone number starts from another number.

The connection destination condition of "06-****-****" coupled with the keyword "BBB" means that the specified area corresponding to the keyword "BBB" is displayed in the case where the telephone number is a telephone number starting from "06" and that the specified area corresponding to the keyword "BBB" is not displayed in the case where the telephone number starts from another number.

The connection destination condition of "0742-12-1234" coupled with the keyword "CCC" means that the specified area corresponding to the keyword "CCC" is displayed in the case where the telephone number is "0742-12-1234" and that the specified area corresponding to the keyword "CCC" is not displayed in the case where the telephone number is another number.

The description of the case where the electronic mail is transmitted ends, and reference is next made to the case where the electronic mail is received.

The mail information is received from the mail server by using the same procedures as those of the steps S301, S303, S306 through S309 and S312 through S314 of Fig. 4. Subsequently, the keyword presence/absence deciding section 61 reads the type code included in the mail information received by the mail receiving section 60 (step S850 of Fig. 21). Then, it is decided whether or not the read type code is the "KEY-MAIL" (step S851). If the type code is not the "KEY-MAIL", i.e., if the type code is the "NORMAL-MAIL", then the keyword presence/absence deciding section 61 transmits the mail text in the received mail information to the display device 5. Consequently, the mail text is displayed on the display device 5 (step S857). The mail receiving section 60 disconnects the connection to the mail server (step S862).

If the type code included in the mail information is the "KEY-MAIL", then the program flow proceeds from step S851 to S852. Consequently, the keyword presence/absence deciding section 61 displays the contents shown in Fig. 24A on the display device 5 so as to indicate that the electronic mail is the electronic mail provided with a keyword. In the state in which the screen of Fig. 24A is displayed, the user inputs a keyword by means of the keyword inputting section 65 (step S852). Fig. 24A shows the case where "ABC" is inputted as a keyword.

If the inputting of the keyword is completed, then the keyword deciding section 62 compares the inputted keyword with the keyword included in the mail information. If the result of comparison indicates inconsistency, then the keyword deciding section 62 displays a message as shown in Fig. 24C on the display device 5 (step S856). The mail receiving section 60 disconnects the connection to the mail server (step S862).

If the result of comparison of the keywords indicates consistency, then the mail converting section 63 reads the keyword specified area (step S854). The mail converting section 63 reads the connection destination condition from the mail information (step S855). The mail converting section 63 reads the inputted telephone number (current connection destination) for establishing connection to the mail server (step S858). Then, the connection destination condition read from the mail information is compared with the current connection destination condition (step S859).

If the current connection destination satisfies the connection destination condition, then a text obtained by decrypting the specified area of keyword consistency is transmitted to the display device 5 and displayed (steps S860 and S861). The mail receiving section 60 disconnects the connection to the mail server (step S862). If the current connection destination does not satisfy the connection destination condition through the decision of step S859, then the screen of Fig. 24C is displayed on the display device 5 (step S863). The connection to the mail server is disconnected (step S862).

On the basis of the above, assuming that the keyword and the connection destination condition are set as shown in, for example, Fig. 22, then the mail text in the specified area corresponding to the keyword "BBB" is displayed when the present embodiment is connected to a mail server of which the telephone number starts from "06", and neither the mail text in the specified area corresponding to the keyword "AAA" nor the mail text in the specified area corresponding to the keyword "CCC" is displayed.

The mail text in the specified area corresponding to the keyword "AAA" is displayed when the present embodiment is connected to a mail server of which the telephone number starts from "03", and neither the mail text in the specified area corresponding to the keyword "BBB" nor the mail text in the specified area corresponding to the keyword "CCC" is displayed.

If the mail format shown in Fig. 25 is described in detail with reference to the example of Fig. 25, then the "KEY-MAIL" of the type code 880 indicates an electronic mail provided with a keyword. According to the display, a destination (To) 881 is "AA, BB, CC", while a destination (Cc) 882 is "EE, FF". An electronic mail title (Sub) 883 is "... information service", while a mail text 884 is "skiing slope".

A keyword specified area 885 is "5-15" indicating that the keyword specified area covers the 5-th through 15-th lines of the mail text. A keyword 886 is "ABC". A connection destination condition 887 is "06-****-****".

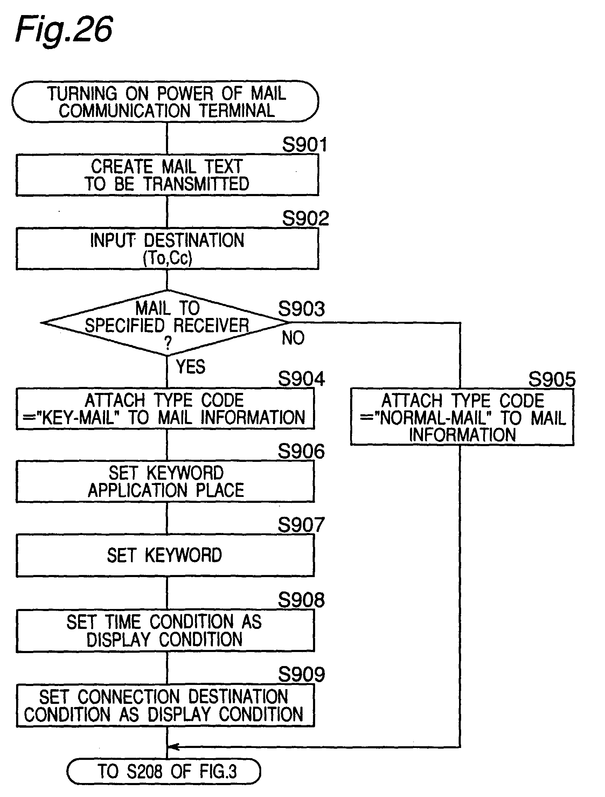

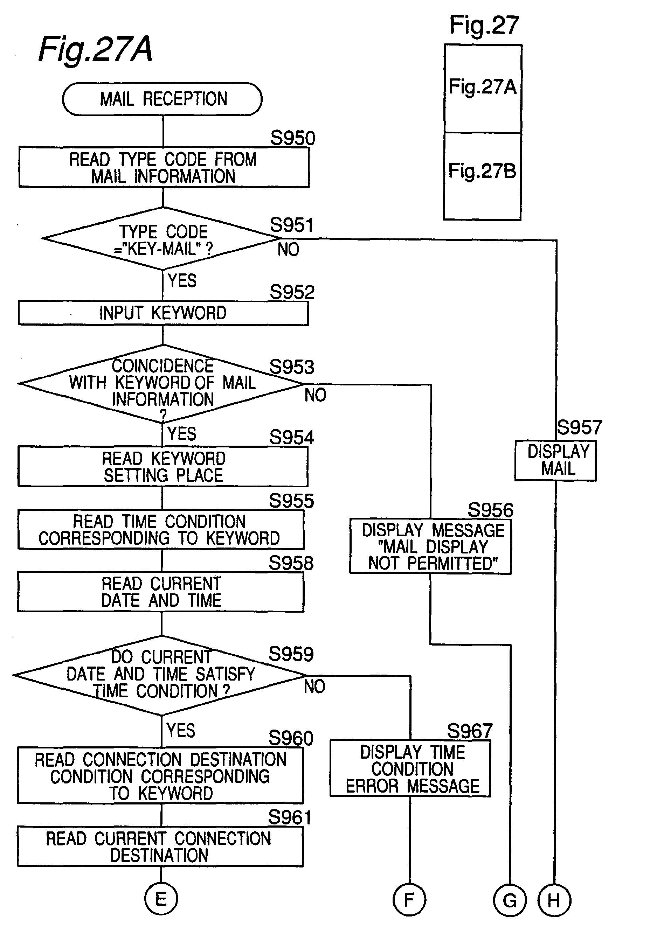

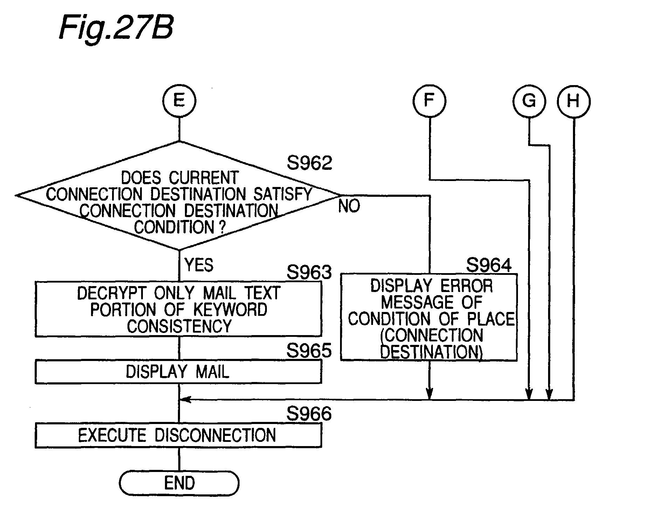

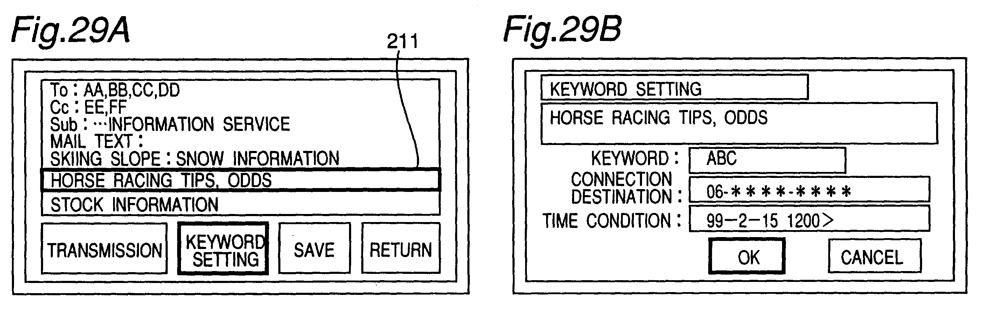

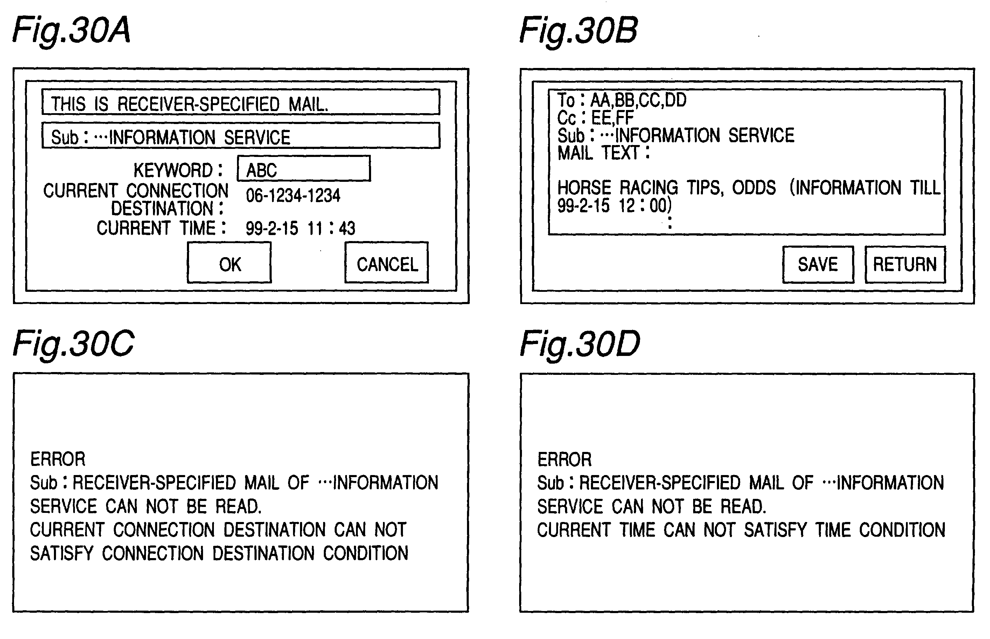

Fig. 26 shows a flowchart showing the principal operation of the fifth embodiment in the transmission stage. Figs. 29A and 29B are explanatory views showing the screens of the display device 5 in the transmission stage. Fig. 27 is a flowchart showing the principal operation of the fifth embodiment in the reception stage. Figs. 30A through 30D are explanatory views showing the screens of the display device 5 in the reception stage. The fifth embodiment will be described in detail with reference to the above figures as the occasion demands (the electrical construction of the fifth embodiment is shown in Fig. 2 when illustrated as a functional block diagram).

The fifth embodiment roughly has a construction corresponding to the inventive aspects mentioned in the claim 4 and claim 5. The fifth embodiment roughly has a construction for displaying the specified area in which the keyword is set only when the time at which an electronic mail is received satisfies the time condition attached to the mail text and the telephone number for establishing connection to the mail server is consistent with the connection destination condition attached to the mail text.

Reference is first made to the case where an electronic mail is transmitted.

If the user sets the present unit in the operating state, then the main menu shown in Fig. 5A is displayed on the display device 5. The user selects "mail transmission" in the state in which the main menu is displayed on the display device 5. If the "mail transmission" is selected, then the mail transmission menu shown in Fig. 5B is displayed on the display device 5.

The user selects "create new mail" in the state in which the mail transmission menu is displayed. Then, the user inputs a mail text by using the mail inputting section 57 (step S901). The user also inputs the destination (To, Cc) (step S902). Assuming now that the user inputs the mail text (text including "horse racing information", "odds" and so on) under the title of "... information service", inputs "AA, BB, CC, DD" as the destination (To) and inputs "EE, FF" as the destination (Cc), then the mail type selection menu shown in Fig. 5C is displayed on the display device 5.

If the "receiver-specified mail" is selected in the state in which the mail type selection menu is displayed, then the "KEY-MAIL" is set as a type code representing the type of the electronic mail for the created mail text (steps S903 and S904). If the "normal mail" is selected in step S903, then the "NORMAL-MAIL" is set as a type code representing the type of the electronic mail (step S905).

If the "receiver-specified mail" is selected, then the screen shown in Fig. 29A is displayed on the display device 5. By using the keyword setting section 56 in this state, the user selects the range that is desired to be displayed only for the specified receiver out of the created mail text. The range selected in this stage becomes the specified range in which the keyword is set (step S906). Fig. 29A shows the case where "horse racing, odds, ..." (the range enclosed by the solid lines 211) is designated as the keyword specified area.

If the inputting of the keyword specified area is completed and the "keyword setting" is selected, then the keyword setting screen shown in Fig. 29B is displayed on the display device 5. By using the keyword setting section 56 in this state, the user inputs a keyword (step S907). Then, the user inputs a time condition (step S908) and further inputs the connection destination condition (step S909). Fig. 29B shows the case where "ABC" is inputted as the keyword, "99-2-15 12:00〉" is inputted as the time condition and "06-****-****" is inputted as the connection destination condition.

These conditions indicate that the conditions are satisfied if the time at which this electronic mail is received is before February 15, 1999 and the connection destination has a telephone number starting from "06".

The subsequent operations are the operations of steps S208 through S220 shown in Fig. 3. That is, the operations are to connect the present unit to the mail server and transmit to the mail server an electronic mail obtained by attaching a type code 880, a destination (To) 881, a destination (Cc) 882, a title 883, a specified area 885, a keyword 886 and a connection destination condition 887 to a mail text 884 as shown in Fig. 25.

The description of the case where the electronic mail is transmitted ends, and reference is next made to the case where the electronic mail is received.

The mail information is received from the mail server by using the same procedures as those of the steps S301, S303, S306 through S309 and S312 through S314 of Fig. 4. Subsequently, the keyword presence/absence deciding section 61 reads the type code included in the mail information received by the mail receiving section 60 (step S950 of Fig. 27). Then, it is decided whether or not the read type code is the "KEY-MAIL" (step S951). If the type code is not the "KEY-MAIL", i.e., if the type code is the "NORMAL-MAIL", then the keyword presence/absence deciding section 61 transmits the mail text in the received mail information to the display device 5. Consequently, the mail text is displayed on the display device 5 (step S957). The mail receiving section 60 disconnects the connection to the mail server (step S966).

If the type code included in the mail information is the "KEY-MAIL", then the program flow proceeds from step S951 to S952. Consequently, the keyword presence/absence deciding section 61 displays the contents shown in Fig. 30A on the display device 5 so as to indicate that the electronic mail is the electronic mail provided with a keyword. In the state in which the screen of Fig. 30A is displayed, the user inputs a keyword by means of the keyword inputting section 65 (step S952). Fig. 30A shows the case where "ABC" is inputted as the keyword.

If the inputting of the keyword is completed, then the keyword deciding section 62 compares the inputted keyword with the keyword included in the mail information. If the result of comparison indicates inconsistency, then the keyword deciding section 62 displays the message shown in Fig. 30C on the display device 5 (step S956). The mail receiving section 60 disconnects the connection to the mail server (step S966).

If the result of comparison of the keywords indicates consistency, then the mail converting section 63 reads the keyword specified area (step S954). The mail converting section 63 reads the time condition from the mail information (step S955). The mail converting section 63 reads the current time from the clock 10 (step S958). Then, the time condition read from the mail information is compared with the current time indicated by the clock 10 (step S959). If the result of comparison indicates that the current time does not satisfy the time condition, then the screen of Fig. 30D is displayed on the display device 5 (step S967). The connection to the mail server is disconnected (step S966).

If the result of comparison indicates that the current time satisfies the time condition, then the mail converting section 63 reads the connection destination condition from the mail information (step S960). The mail converting section 63 reads the telephone number (of the current connection destination) inputted for establishing connection to the mail server (step S961). Then, the connection destination condition read from the mail information is compared with the current connection destination (step S962).

If the current connection destination satisfies the connection destination condition, then the keyword deciding section 62 transmits a text obtained by decrypting the specified area of keyword consistency to the display device 5 and displays the same since both the current time and the current connection destination satisfy the conditions (steps S963 and S965). The mail receiving section 60 disconnects the connection to the mail server (step S966). If the current connection destination does not satisfy the connection destination condition through the decision of step S962, then the screen of Fig. 30C is displayed on the display device 5 (step S964). The connection to the mail server is disconnected (step S966).

On the basis of the above, assuming that the current time is 11:43 on February 15, 1999 and the current connection destination is "06-1234-1234" as shown in, for example, Fig. 30A, then the mail text in the specified area corresponding to the keyword "ABC" is displayed on the display device 5 since the time condition is "99-2-15 12:00〉" and the connection destination condition is "06-****-****".

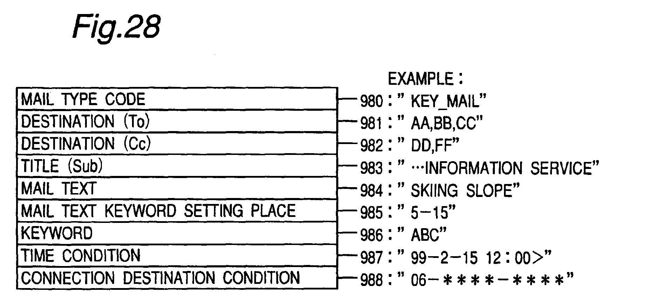

If the mail format shown in Fig. 28 is described in detail with reference to the example of Fig. 28, then the "KEY-MAIL" of the type code 980 indicates an electronic mail provided with a set keyword. According to the display, a destination (To) 981 is "AA, BE, CC", while a destination (Cc) 982 is "EE, FF". An electronic mail title (Sub) 983 is "... information service", while a mail text 984 is "skiing slope".

A keyword specified area 985 is "5-15" indicating that the keyword specified area covers the 5-th through 15-th lines of the mail text. A keyword 986 is "ABC". A time condition 987 is "99-2-15 12:00〉". A connection destination condition 988 is "06-****-****".

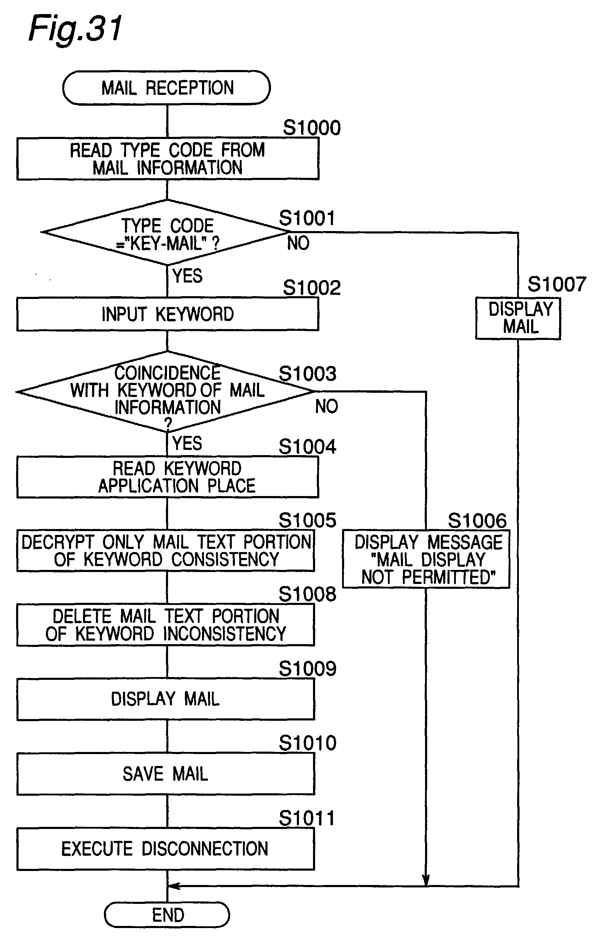

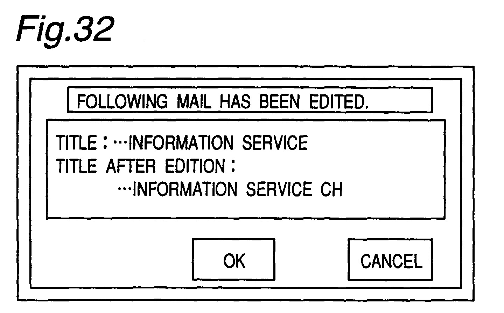

Fig. 31 shows a flowchart showing the principal operation of the sixth embodiment in the reception stage. Fig. 32 is an explanatory view showing the screen of the display device 5 in the reception stage. The sixth embodiment will be described in detail with reference to the above figures as the occasion demands (the electrical construction of the sixth embodiment is shown in Fig. 2 when illustrated as a functional block diagram).

The sixth embodiment roughly has a construction corresponding to the inventive aspect mentioned in the claim 6. The sixth embodiment roughly has a construction for storing only the mail text set in the specified area corresponding to the keyword inputted in the reception stage when a plurality of specified areas are set and allowing the stored mail text to be displayed again without inputting any keyword.

The mail information is received from the mail server by using the same procedures as those of the steps S301, S303, S306 through S309 and S312 through S314 of Fig. 4. Subsequently, the keyword presence/absence deciding section 61 reads the type code included in the mail information received by the mail receiving section 60 (step S1000 of Fig. 31). Then, it is decided whether or not the read type code is the "KEY-MAIL" (step S1001).

If the type code is not the "KEY-MAIL", i.e., if the type code is the "NORMAL-MAIL", then the keyword presence/absence deciding section 61 transmits the mail text in the received mail information to the display device 5. Consequently, the mail text is displayed on the display device 5 (step S1007). The mail receiving section 60 disconnects the connection to the mail server (step S1011).

If the type code included in the mail information is the "KEY-MAIL", then the program flow proceeds from step S1001 to S1002. Therefore, the user inputs a keyword by using the keyword inputting section 65.

If the inputting of the keyword is completed, then the keyword deciding section 62 compares the inputted keyword with the keyword included in the mail information. If the result of comparison indicates inconsistency, then the keyword deciding section 62 displays the message indicating that the mail text can not be displayed on the display device 5 (step S1006). The mail receiving section 60 disconnects the connection to the mail server (step S1011.

If the result of comparison of the keywords indicates consistency, then the mail converting section 63 reads the keyword specified area (step S1004). The read specified area is decrypted (step S1005). The keyword deciding section 62 displays a message as shown in Fig. 32 on the display device 5 when specified areas are set in the plurality of places of the mail text and thereafter deletes the mail text in each specified area of keyword inconsistency, leaving intact only the mail text in the specified area of keyword consistency (step S1008).

If an electronic mail having only one specified area is received, then the deleting is not executed in the operation of step S1008.

Then, the keyword deciding section 62 displays the mail text in the specified area of keyword consistency on the display device 5 (step S1009). The keyword deciding section 62 also stores the mail text in the specified area of keyword consistency into a storage device (not shown) under the title of "... information service CH" after the edition shown in Fig. 32 (step S1010). Subsequently, the connection to the mail server is disconnected (step S1011).

If it is tried to display again this electronic mail on the display device 5 after the completion of the above-mentioned operation, then the title of "... information service CH" after the edition shown in Fig. 32 is inputted. If the title of "... information service CH" is inputted, then the display section 64 displays on the display device 5 the mail text (mail text in the specified area of keyword consistency) that has been stored in the storage device (not shown).

It is to be noted that the title of "... information service CH" after the edition shown in Fig. 32 is the title inputted in step S1010.

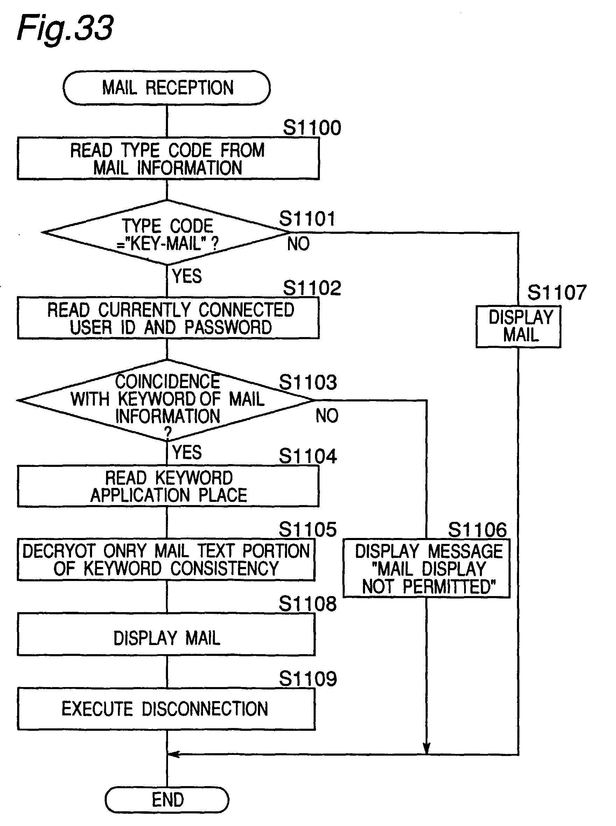

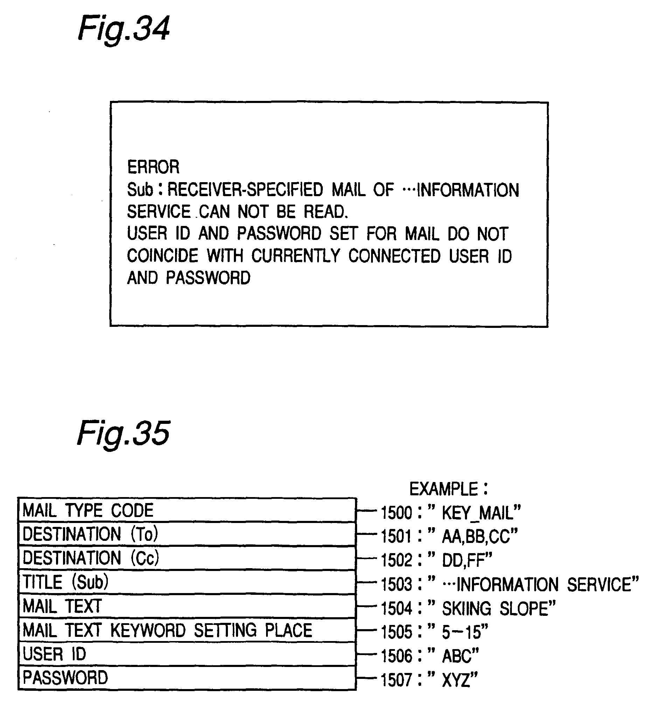

Fig. 33 shows a flowchart showing the principal operation of the seventh embodiment in the reception stage. Fig. 34 is an explanatory view showing the screen of the display device 5 in the reception stage. The seventh embodiment will be described in detail with reference to the above figures as the occasion demands (the electrical construction of the seventh embodiment is shown in Fig. 2 when illustrated as a functional block diagram).

The seventh embodiment roughly has a construction corresponding to the inventive aspect mentioned in the claim 7. The seventh embodiment roughly has a construction for displaying the specified area in which a keyword has been set when the user ID and the password inputted in the reception stage coincide with the user ID and the password of the received electronic mail.

The mail information is received from the mail server by using the same procedures as those of the steps S301, S303, S306 through S309 and S312 through S314 of Fig. 4. Subsequently, the keyword presence/absence deciding section 61 reads the type code included in the mail information received by the mail receiving section 60 (step S1100 of Fig. 33). Then, it is decided whether or not the read type code is the "KEY-MAIL" (step S1101).

If the type code is not the "KEY-MAIL", i.e., if the type code is the "NORMAL-MAIL", then the keyword presence/absence deciding section 61 transmits the mail text in the received mail information to the display device 5. Consequently, the mail text is displayed on the display device 5 (step S1107). The mail receiving section 60 disconnects the connection to the mail server (step S1109).

If the type code included in the mail information is the "KEY-MAIL", then the program flow proceeds from step S1101 to S1102 so as to read the user ID and the password that have been inputted at the time of establishing connection to the mail server.

If the reading of the user ID and the password is completed, then the keyword deciding section 62 compares the read user ID and password with the user ID and password included in the mail information. If the result of comparison indicates inconsistency, then the keyword deciding section 62 displays the message indicating that the mail text can not be displayed on the display device 5 as shown in Fig. 34 (step S1106). The mail receiving section 60 disconnects the connection to the mail server (step S1109).

If the result of comparison indicates consistency, then the mail converting section 63 reads the keyword specified area (step S1104). The read specified area is decrypted (step S1105). The decrypted mail text is displayed on the display device 5 (step S1108). Subsequently, the connection to the mail server is disconnected (step S1109).

The mail format shown in Fig. 35 indicates the mail format to be used for the seventh embodiment. If the mail format is described in detail with reference to the example of Fig. 35, then the "KEY-MAIL" of a type code 1500 indicates an electronic mail with a set keyword. According to the display, a destination (To) 1501 is "AA, BB, CC", while a destination (Cc) 1502 is "EE, FF". An electronic mail title (Sub) 1503 is "... information service", while a mail text 1504 is "skiing slope".

A keyword specified area 1505 is "5-15" indicating that the keyword specified area covers the 5-th through 15-th lines of the mail text. An user ID is "ABC", while a password 1507 is "XYZ".

In each of the electronic mail communication terminal units described in connection with the first embodiment through the seventh embodiment, the electronic mail communicating operation is put into effect by means of a program stored in each unit. This program is stored in a storage medium that can be read by a computer. This storage medium is not illustrated in the figures according to the present invention. However, this program medium may be a program medium that can be read by being inserted into a program reading device provided inside the unit or a program medium stored in a storage means such as a program memory inside the unit. In either case, the stored program may be executed by being directly accessed or provided by a system for reading a program, downloading the read program into a main memory (not shown) and executing the program. This downloading use program has preparatorily been stored in the main body of the unit.

In this case, the program medium is a storage medium being able to be separated from the main body and is allowed to be provided by media that can carry the program in a fixed manner and include tapes such as magnetic tapes and cassette tapes, magnetic disks such as floppy disks and hard disks, optical disks such as CD-ROM, MO, MD and DVD, cards such as IC cards and optical cards and semiconductor memories such as mask ROM, EPROM, EEPROM and flash ROM.

The present invention is provided with a means capable of exchanging communications with an external device. Therefore, a medium that carries the program in a fluidic manner so as to download the program by establishing connection to the external device by the means. If the program is downloaded from a communication network as described above, then it is proper to preparatorily store the download use program in the main body of the unit or to install the program from another storage medium.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An electronic mail communication terminal unit for communicating an electronic mail obtained by attaching data that represents a specified area (405) and a keyword (406) corresponding to the specified area to a mail text (404) of the electronic mail, the specified area being defined within a predetermined range of the mail text (404), wherein
the unit comprises a keyword inputting section (65) by which a keyword is inputted and the mail text set in the specified area (405) is displayed when the keyword inputted by the keyword inputting section (65) coincides with the keyword (406) attached to the mail text (404).

2. An electronic mail communication terminal unit for communicating an electronic mail obtained by attaching data that represents a plurality of specified areas (505, 507, 509) set for a mail text (504) and keywords (506, 508, 510) associated respectively with the plurality of specified areas to the mail text (504) of the electronic mail, the specified areas being defined within predetermined ranges of the mail text (504), wherein
the unit comprises a keyword inputting section (65) by which a keyword is inputted and the mail text (504) set in a specified area corresponding to a keyword that coincides with the keyword inputted by the keyword inputting section (65) among the keywords (506, 508, 510) associated with the plurality of specified areas (505, 507, 509) is displayed.

3. An electronic mail communication terminal unit as claimed in claim 1, wherein
the unit comprises a means (60) for receiving the electronic mail to which a processing operation (687) associated with the specified area is attached and
the mail text (684) set in the specified area is displayed by a method according to the processing operation (687).

4. An electronic mail communication terminal unit as claimed in claim 1, wherein
the unit comprises a means (60) for receiving an electronic mail to which a time condition (787) associated with the specified area (765) is attached and
a mail text (784) set in a specified area (785) is displayed when a time at which the electronic mail is received satisfies the time condition (787).

5. An electronic mail communication terminal unit as claimed in claim 1, wherein
the unit comprises a means (60) for receiving an electronic mail to which a connection destination condition (887) associated with the specified area (885) is attached and
a mail text (884) set in a specified area (885) is displayed when connection destination designation data inputted for connection to an originator of the electronic mail satisfies the connection destination condition (887).

6. An electronic mail communication terminal unit as claimed in claim 2, wherein
a plurality of specified areas (1505) are set for the mail text (1504), the unit comprises a means (60) for receiving an electronic mail obtained by attaching data that represents a plurality of specified areas (1505) and keywords (1506, 1507) associated with the plurality of specified areas (1505) to the mail text (1504),
the mail text set in the specified area corresponding to the keyword that does not coincide with the keyword inputted by the keyword inputting section (65) among the keywords (1506, 1507) associated with the plurality of specified areas (1505) is deleted (S1008) and the mail text set in the specified area corresponding to the keyword that coincides with the keyword inputted by the keyword inputting section (65) among the keywords associated with the plurality of specified areas is stored (S1010).

7. An electronic mail communication terminal unit as claimed in claim 1, wherein
the keyword is comprised of an user ID (1506) and a password (1507).

8. A storage medium which can be read by a computer and stores a control program of an electronic mail communication method for receiving an electronic mail obtained by attaching data that represents a specified area and a keyword associated with the specified area to a mail text, the specified area being defined as a predetermined range for the mail text of the electronic mail and the method comprising:
a procedure for deciding whether or not a keyword is attached to the mail text of the received electronic mail;
a procedure for deciding whether or not the inputted keyword coincides with the keyword attached to the mail text when it is decided that a keyword is attached; and
a procedure for displaying the mail text set in the specified area only when the inputted keyword coincides with the keyword attached to the mail text.
